# EUROPEAN PATENT APPLICATION

(11) **EP 4 656 643 A1**
(43) Date of publication of application: **03.12.2025**
(21) Application number: 24756877.7
(22) Date of filing: 13.02.2024
(51) Int. Cl.: C07F 7/18, C08G 65/336, C09K 3/18

(54) **FLUORINE-CONTAINING SILANE COMPOUND**

(30) Priority: 13.02.2023 JP 2023020365; 07.04.2023 JP 2023062963
(71) Applicant: Daikin Industries, Ltd., Osaka-shi, Osaka 530-0001 (JP)
(72) Inventor: TAKANO, Shinya, Osaka-Shi, Osaka 530-0001 (JP); NOMURA, Takashi, Osaka-Shi, Osaka 530-0001 (JP); WATANABE, Yusuke, Osaka-Shi, Osaka 530-0001 (JP); MORIMOTO, Kazuki, Osaka-Shi, Osaka 530-0001 (JP); KATSUMA, Nozomi, Osaka-Shi, Osaka 530-0001 (JP)
(74) Representative: Hoffmann Eitle
(86) International application number: PCT/JP2024/004858
(87) International publication number: WO 2024/172034

(57) **Abstract**

The present invention provides a fluorine containing silane compound represented by the following formula (1) wherein Rf¹ is each independently a group having CF₃ at an end, provided that CF₃ at the end does not have CF₂ at a vicinal position, X^{A} is each independently a single bond, an oxygen atom, or a di- to decavalent organic group, R^{Si} is a monovalent group containing a Si atom to which a hydroxyl group or a hydrolyzable group is bonded, α1 is an integer of 1 to 9, and α2 is an integer of 1 to 9.

(Rf¹)_{α1}-X^{A}-(R^{Si})_{α2} ··· (1)

## Description

### Technical Field

The present disclosure relates to a fluorine containing silane compound.

### Background Art

Certain types of silane compounds are known to be capable of providing excellent water- and oil-repellency, when used in surface treatment of a substrate (Patent Literature 1).

### Citation List

### Patent Literature

Patent Literature 1: JP 2019-44179 A

### Summary of Invention

### Technical Problem

An object of the present disclosure is to provide a new fluorine containing silane compound.

### Solution to Problem

The present disclosure includes the following embodiments.
[1] A fluorine containing silane compound represented by the following formula (1):

   (Rf¹)_{α1}-X^{A}-(R^{Si})_{α2} ··· (1)

   wherein
   Rf¹ is each independently a group having CF₃ at an end,
   provided that CF₃ at the end does not have CF₂ at a vicinal position,
   X^{A} is each independently a single bond, an oxygen atom, or a di- to decavalent organic group,
   R^{Si} is a monovalent group containing a Si atom to which a hydroxyl group or a hydrolyzable group is bonded,
   α1 is an integer of 1 to 9, and
   α2 is an integer of 1 to 9.
[2] The fluorine containing silane compound according to [1], wherein Rf¹ is each independently a group represented by R^{A1}-X^{B}-
   wherein
   R^{A1} is CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-, and
   X^{B} is
   a single bond,
   a group containing a divalent siloxane group, or
   a group represented by -(CFH)ₐ₁-(CH₂)_{b1}-(O)_{c1}-(C(R^{A2})ₑ₁H₂₋ₑ₁)_{d1}-(NR^{A3})_{f1}-
   wherein
   R^{A2} is a monovalent group having CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-,
   R^{A3} is a hydrogen atom, or a monovalent group having CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-,
   a1 is an integer of 0 to 200,
   b1 is an integer of 0 to 200,
   c1 is an integer of 0 to 200,
   d1 is an integer of 0 to 200,
   e1 is 1 or 2,
   f1 is an integer of 0 to 200, and
   the occurrence order of the respective repeating units enclosed in parentheses provided with the signs a1, b1, c1, d1 and f1 is not limited.
[3] The fluorine containing silane compound according to [2], wherein R^{A1} is CF₃O-, CF₃NH-, or (CF₃)₂N-.
[4] The fluorine containing silane compound according to [2] or [3], wherein R^{A2} is a monovalent group having CF₃O-, CF₃NH-, or (CF₃)₂N-.
[5] The fluorine containing silane compound according to any one of [2] to [4], wherein R^{A3} is a hydrogen atom, or a monovalent group having CF₃O-.
[6] The fluorine containing silane compound according to [2] or [3], wherein X^{B} is a group represented by -(CFH)ₐ₁-(CH₂)_{b1}-(O)_{c1}-
   wherein
   a1 is an integer of 0 to 200,
   b1 is an integer of 0 to 200,
   c1 is an integer of 0 to 10, and
   the occurrence order of the respective repeating units enclosed in parentheses provided with the signs a1, b1 and c1 is not limited.
[7] The fluorine containing silane compound according to [2] or [3], wherein X^{B} is a group represented by -(CH₂)_{b1}-
   wherein b1 is an integer of 0 to 36.
[8] The fluorine containing silane compound according to [2] or [3], wherein X^{B} is a group represented by -(CH₂)_{g1}-R^{S}-(CH₂)_{g1}-
   wherein
   g1 is each independently an integer of 0 to 30, and
   R^{S} is a group represented by the following formula: 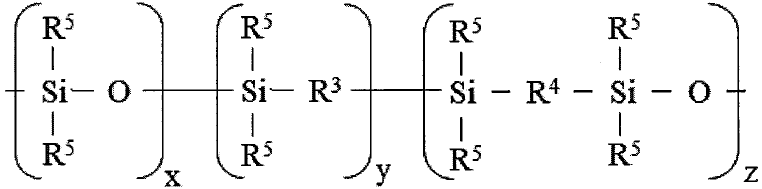
   wherein
   R³ is each independently a single bond, a C₁₋₁₂ alkylene group, -R⁶-O-R⁶-, -R⁸-R⁷- R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
   R⁴ is each independently a C₁₋₁₂ alkylene group, -R⁶-O-R⁶-, -R⁸-R⁷-R⁸-, -R⁸-R⁷- R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
   R⁶ is each independently a C₁₋₆ alkylene group,
   R⁷ is each independently an optionally substituted phenylene group or naphthylene group,
   R⁸ is each independently a single bond, or a C₁₋₆ alkylene group,
   R⁹ is each independently a single bond, an oxygen atom,
   R⁵ is each independently a hydrocarbon group,
   x is an integer of 0 to 200,
   y is an integer of 0 to 200,
   z is an integer of 0 to 200,
   x + y + z is 1 or more, and
   the occurrence order of the respective repeating units enclosed in parentheses provided with x, y or z is not limited.
[9] The fluorine containing silane compound according to any one of [1] to [8], wherein X^{A} is a single bond, -(X⁵²)₁₅-, or a group represented by (X^{A1}): 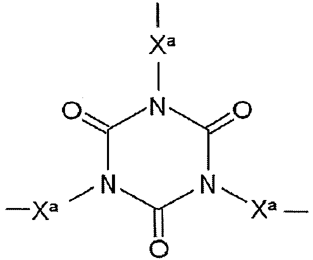 wherein
   X⁵² is each independently a group selected from the group consisting of -O-, -S-, an o-, m- or p-phenylene group, -CO-, -C(O)O-, -OC(O)-, -CONR⁵⁴-, -NR⁵⁴CO-, -O- CONR⁵⁴-, -NR⁵⁴CO-O-, -NR⁵⁴CONR⁵⁴-, -NR⁵⁴-, and -(CH₂)ₙ₅-,
   R⁵⁴ is each independently a hydrogen atom, or a monovalent organic group,
   n5 is each independently an integer of 1 to 30,
   15 is an integer of 1 to 10, and
   X^{a} is each independently a single bond or a divalent linking group.
[10] The fluorine containing silane compound according to any one of [1] to [9], wherein R^{Si} is a group represented by the following formula (S1), (S2), (S3), (S4) or (S5):

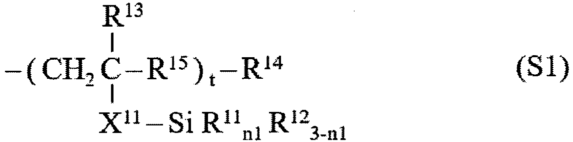

   -SiR¹¹ₙ₁R¹²₃₋ₙ₁ (S2)

   - SiR^{a1}ₖ₁R^{b1}ₗ₁R^{c1}ₘ₁ (S3)

   -CR^{d1}ₖ₂R^{e1}ₗ₂R^{f1}ₘ₂ (S4)

   -NR^{g1}ₖ₃R^{h1}ₗ₃ (55)

   wherein
   R¹¹ is each independently a hydroxyl group or a hydrolyzable group,
   R¹² is each independently a monovalent organic group,
   n1 is each independently an integer of 0 to 3 for each (SiR¹¹ₙ₁R¹²₃₋ₙ₁) unit,
   X¹¹ is each independently a single bond or a divalent organic group,
   R¹³ is each independently a hydrogen atom or a monovalent organic group,
   t is each independently an integer of 2 or more,
   R¹⁴ is each independently a hydrogen atom, a halogen atom, or -X¹¹-SiR¹¹ₙ₁R¹²₃- n1,
   R¹⁵ is each independently a single bond, an oxygen atom, an alkylene group having 1 to 6 carbon atoms, or an alkyleneoxy group having 1 to 6 carbon atoms,
   R^{a1} is each independently -Z¹-SiR²¹ₚ₁R²²_{q1}R²³ᵣ₁,
   Z¹ is each independently a divalent organic group,
   R²¹ is each independently -Z^{1'}-SiR^{21'}_{p1'}R^{22'}_{q1'}R^{23'}_{r1'},
   R²² is each independently a hydroxyl group or a hydrolyzable group,
   R²³ is each independently a monovalent organic group,
   p1 is each independently an integer of 0 to 3,
   q1 is each independently an integer of 0 to 3,
   r1 is each independently an integer of 0 to 3,
   Z^{1'} is each independently a divalent organic group,
   R^{21'} is each independently -Z^{1"}-SiR^{22"}_{q1}-R^{23"}_{r1"};
   R^{22'} is each independently a hydroxyl group or a hydrolyzable group,
   R^{23'} is each independently a monovalent organic group,
   p1' is each independently an integer of 0 to 3,
   q1' is each independently an integer of 0 to 3,
   r1' is each independently an integer of 0 to 3,
   Z^{1"} is each independently a divalent organic group,
   R^{22"} is each independently a hydroxyl group or a hydrolyzable group,
   R^{23"} is each independently a monovalent organic group,
   q1" is each independently an integer of 0 to 3,
   r1" is each independently an integer of 0 to 3,
   R^{b1} is each independently a hydroxyl group or a hydrolyzable group,
   R^{c1} is each independently a monovalent organic group,
   k1 is each independently an integer of 0 to 3,
   11 is each independently an integer of 0 to 3,
   m1 is each independently an integer of 0 to 3,
   R^{d1} is each independently -Z²-CR³¹ₚ₂R³²_{q2}R³³ᵣ₂,
   Z² is each independently a single bond, an oxygen atom, or a divalent organic group,
   R³¹ is each independently -Z^{2'}-CR^{32'}_{q2'}R^{33'}_{r2'},
   R³² is each independently -Z³-SiR3⁴ₙ₂R³⁵₃₋ₙ₂,
   R³³ is each independently a hydrogen atom, a hydroxyl group, or a monovalent organic group,
   p2 is each independently an integer of 0 to 3,
   q2 is each independently an integer of 0 to 3,
   r2 is each independently an integer of 0 to 3,
   Z^{2'} is each independently a single bond, an oxygen atom, or a divalent organic group,
   R^{32'} is each independently -Z³-SiR3⁴ₙ₂R³⁵₃₋ₙ₂,
   R^{33'} is each independently a hydrogen atom, a hydroxyl group, or a monovalent organic group,
   q2' is each independently an integer of 0 to 3,
   r2' is each independently an integer of 0 to 3,
   Z³ is each independently a single bond, an oxygen atom, or a divalent organic group;
   R³⁴ is each independently a hydroxyl group or a hydrolyzable group,
   R³⁵ is each independently a monovalent organic group,
   n2 is each independently an integer of 0 to 3,
   R^{e1} is each independently -Z³-SiR3⁴ₙ₂R³⁵₃₋ₙ₂,
   R^{f1} is each independently a hydrogen atom, a hydroxyl group, or a monovalent organic group,
   k2 is each independently an integer of 0 to 3,
   12 is each independently an integer of 0 to 3,
   m2 is each independently an integer of 0 to 3,
   R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or - Z⁴-CR^{d1}ₖ₂R^{e1}ₗ₂R^{f1}ₘ₂,
   Z⁴ is each independently a single bond, an oxygen atom, or a divalent organic group,
   k3 is 1 or 2, and
   l3 is 0 or 1,
   provided that in the formula (S1), (S2), (S3), (S4), or (S5), at least two Si atoms to which a hydroxyl group or a hydrolyzable group is bonded are present.
[11] The fluorine containing silane compound according to any one of [1] to [10],
   wherein
   Rf¹ is R^{A1}-X^{B}-,
   R^{A1} is CF₃- or CF₃O-,
   X^{B} is a single bond,
   X^{A}is -(p-phenylene)ᵥ₁-(CH₂)ᵥ₂-R⁵⁷ᵥ₃-(CH₂)ᵥ₄-,
   R⁵⁷ is -CONH-, -NHCO-, -COO-, or -O-,
   v1 is 0 or 1,
   v2 is an integer of 0 to 20,
   v3 is 0 or 1,
   v4 is an integer of 2 to 20,
   R^{Si} is -SiR¹¹₃,
   R¹¹ is a methoxy group,
   α1 is 1, and
   α2 is 1.
[12] The fluorine containing silane compound according to any one of [1] to [11], which is selected from the following compounds: 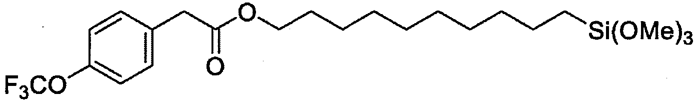 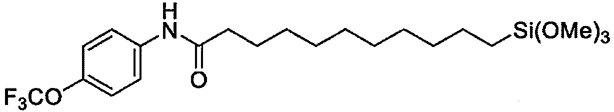 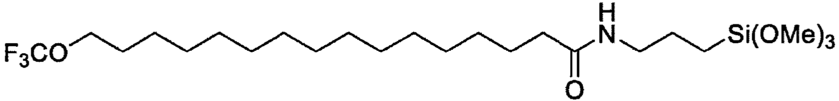 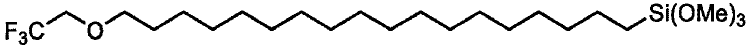
[13] A surface-treating agent comprising the fluorine containing silane compound according to any one of [1] to [12].
[14] The surface-treating agent according to [13], further comprising a condensed product of the fluorine containing silane compound according to any one of [1] to [12].
[15] The surface-treating agent according to [13] or [14], further comprising an alcohol represented by R⁹⁰-OH, wherein R⁹⁰ is a monovalent organic group.
[16] The surface-treating agent according to any one of [13] to [15], which is for vacuum deposition.
[17] The surface-treating agent according to any one of [13] to [15], which is for wet coating.
[18] A pellet comprising the surface-treating agent according to any one of [13] to [17].
[19] An article comprising a substrate and a layer on the substrate, the layer being formed from the fluorine containing silane compound according to any one of [1] to [12].
[20] The article according to [19], comprising an intermediate layer containing silicon oxide between the substrate and the layer.
[21] The article according to [20], wherein the intermediate layer comprises alkali metal atoms.
[22] The article according to [21], wherein at least a portion of the alkali metal atoms are sodium.
[23] The article according to [19] or [22], which is an optical member.
[24] The article according to [23], which is a display.

### Advantageous Effect of Invention

According to the present disclosure, there can be provided a new fluorine containing silane compound.

### Description of Embodiments

The term "monovalent organic group" as used herein refers to a carbon containing monovalent group. The monovalent organic group is not limited, and may be a hydrocarbon group or a derivative thereof. The derivative of a hydrocarbon group refers to a group that has one or more of N, O, S, Si, amide, sulfonyl, siloxane, carbonyl, carbonyloxy, and the like at an end or in the molecular chain of the hydrocarbon group.

The term "divalent organic group" as used herein is not limited, and examples thereof include a divalent group obtained by further removing one hydrogen atom from the hydrocarbon group.

As used herein, the "hydrocarbon group" refers to a group containing carbon and hydrogen and a group in which a hydrogen atom is removed from the molecule. Such a hydrocarbon group is not limited, and examples thereof include hydrocarbon groups having 1 to 20 carbon atoms, such as an aliphatic hydrocarbon group and an aromatic hydrocarbon group. The "aliphatic hydrocarbon group" may be either linear, branched, or cyclic, and may be either saturated or unsaturated. The hydrocarbon group may contain one or more ring structures. Such a hydrocarbon group is optionally substituted with one or more substituents. Such a hydrocarbon group may have one or more of N, O, S, Si, amide, sulfonyl, siloxane, carbonyl, carbonyloxy, and the like at an end or in the molecular chain thereof.

The substituent of the "hydrocarbon group" as used herein is not limited, and examples thereof include a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group, each of which is optionally substituted with one or more halogen atoms.

The term "hydrolyzable group" as used herein refers to a group that can undergo a hydrolysis reaction, namely, refers to a group that can be removed from the main backbone of a compound by a hydrolysis reaction. Examples of the hydrolyzable group include -OR^{h}, -OCOR^{h}, -O-N=CR^{h}₂, -NR^{h}₂, -NHR^{h}, or -NCO (in these formulae, R^{h} represents a substituted or unsubstituted alkyl group having 1 to 4 carbon atoms), and - OR^{h} (that is, an alkoxy group) is preferred. Examples of R^{h} include an unsubstituted alkyl group such as a methyl group, an ethyl group, a propyl group, an isopropyl group, a n-butyl group, and an isobutyl group; and a substituted alkyl group such as a chloromethyl group. Among them, an alkyl group, in particular an unsubstituted alkyl group, is preferred, and a methyl group or an ethyl group is more preferred. In one embodiment, R^{h} is a methyl group, and in another embodiment, R^{h} is an ethyl group.

### [Fluorine containing silane compound]

The fluorine containing silane compound of the present disclosure is a fluorine containing silane compound represented by the following formula (1):

(Rf¹)_{α1}-X^{A}-(R^{Si})_{α2} ··· (1)

wherein
Rf¹ is each independently a group having CF₃ at an end,
provided that CF₃ at the end does not have CF₂ at a vicinal position,
X^{A} is each independently a single bond, an oxygen atom, or a di- to decavalent organic group,
R^{Si} is a monovalent group containing a Si atom to which a hydroxyl group or a hydrolyzable group is bonded,
α1 is an integer of 1 to 9, and
α2 is an integer of 1 to 9.
Rf¹ is each independently a group having CF₃ at an end.

Preferably, Rf¹ may be each independently a group represented by R^{A1}-X^{B}-
wherein
R^{A1} is CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-, and
X^{B} is
a single bond,
a group containing a divalent siloxane group, or
a group represented by -(CFH)ₐ₁-(CH₂)_{b1}-(O)_{c1}-(C(R^{A2})ₑ₁H₂₋ₑ₁)_{d1}-(NR^{A3})_{f1}-
wherein
R^{A2} is a monovalent group having CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-,
R^{A3} is a hydrogen atom, or a monovalent group having CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-,
a1 is an integer of 0 to 200,
b1 is an integer of 0 to 200,
c1 is an integer of 0 to 200,
d1 is an integer of 0 to 200,
e1 is 1 or 2,
f1 is an integer of 0 to 200, and
the occurrence order of the respective repeating units enclosed in parentheses provided with the signs a1, b1, c1, d1 and f1 is not limited.
R^{A1} is CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-. R^{A1} may be preferably CF₃O-, CF₃NH-, (CF₃)₂N-, CF₃S-, CF₃C(=O)-, CF₃C(=O)O-, CF₃OC(=O)-, CF₃CONH-, CF₃NHCO-, CF₃CON(CF₃)-, or (CF₃)₂NCO-, and more preferably CF₃O-, CF₃NH-, or (CF₃)₂N-.

In one embodiment, R^{A1} may be CF₃O-.

In another embodiment, R^{A1} may be CF₃NH- or (CF₃)₂N-, and preferably CF₃NH-.
X^{B} is
a single bond,
a group containing a divalent siloxane group, or
a group represented by -(CFH)ₐ₁-(CH₂)_{b1}-(O)ₑ₁-(C(R^{A2})ₑ₁H₂₋ₑ₁)_{d1}-(NR^{A3})_{f1}-
wherein
R^{A2} is a monovalent group having CF₃-, CF₃O-, CF₃NH-, (CF₃)₂N-, CF₃S-, CF₃C(=O)-, CF₃C(=O)O-, CF₃OC(=O)-, CF₃CONH-, or CF₃CON(CF₃)-,
R^{A3} is a hydrogen atom, or a monovalent group having CF₃-, CF₃O-, CF₃NH-, (CF₃)₂N-, CF₃S-, CF₃C(=O)-, CF₃C(=O)O-, CF₃OC(=O)-, CF₃CONH-, or CF₃CON(CF₃)-,
a1 is an integer of 0 to 200,
b1 is an integer of 0 to 200,
c1 is an integer of 0 to 200,
d1 is an integer of 0 to 200,
e1 is 1 or 2,
fl is an integer of 0 to 200, and
the occurrence order of the respective repeating units enclosed in parentheses provided with the signs a1, b1, c1, d1 and f1 is not limited.

In one embodiment, X^{B} is a single bond.

In another embodiment, X^{B} is
a group represented by -(CFH)ₐ₁-(CH₂)_{b1}-(O)_{c1}-(C(R^{A2})ₑ₁H₂₋ₑ₁)_{d1}-(NR^{A3})_{f1}-
wherein
R^{A2} is a monovalent group having CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-,
a1 is an integer of 0 to 200,
b1 is an integer of 0 to 200,
c1 is an integer of 0 to 200,
d1 is an integer of 0 to 200,
e1 is 1 or 2,
f1 is an integer of 0 to 200, and
the occurrence order of the respective repeating units enclosed in parentheses provided with the signs a1, b1, c1, d1 and f1 is not limited.
R^{A2} is a monovalent group having CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-.
R^{A2} may be a monovalent group having CF₃O-, CF₃NH-, (CF₃)₂N-, CF₃S-, CF₃C(=O)-, CF₃C(=O)O-, CF₃OC(=O)-, CF₃CONH-, or CF₃CON(CF₃)-, and more preferably a monovalent group having CF₃O-, CF₃NH-, or (CF₃)₂N-.
R^{A2} may be preferably a group represented by R^{A2'}-X^{A2}-
wherein
R^{A2'} is CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-, preferably CF₃O-, CF₃NH-, (CF₃)₂N-, CF₃S-, CF₃C(=O)-, CF₃C(=O)O-, CF₃OC(=O)-, CF₃CONH-, or CF₃CON(CF₃)-, and more preferably CF₃O-, CF₃NH-, or (CF₃)₂N-, and
X^{A2} is a single bond, or a divalent group.
X^{A2} is preferably a single bond, a C₁₋₃₆ alkylene group, -(CH₂)_{y1}-(O)_{y2}- (wherein y1 is an integer of 1 to 200, such as an integer of 2 to 100, 5 to 100 or 10 to 50, and y2 is an integer of 1 to 100, such as an integer of 2 to 50, 3 to 30 or 5 to 10), or -(CH₂)_{y3}-phenylene-(CH₂)_{y4}-(wherein y3 is an integer of 0 to 6, such as an integer of 1 to 6, and y4 is an integer of 0 to 6, such as an integer of 1 to 6). Such a C₁₋₃₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In one embodiment, R^{A2} may be preferably CF₃O-, CF₃NH-, or (CF₃)₂N-, and more preferably CF₃O-.

R^{A3} is a hydrogen atom, or a monovalent group having CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-.

In one embodiment, R^{A3} is a hydrogen atom.

In another embodiment, R^{A3} is a monovalent group having CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-.

The monovalent group in R^{A3} may be preferably a monovalent group having CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-, and more preferably a hydrogen atom, or a monovalent group having CF₃O-, CF₃NH- or (CF₃)₂N-.

The monovalent group in R^{A3} may be preferably a group represented by R^{A3'}-X^{A3}-
wherein
R^{A3'} is CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-, preferably CF₃O-, CF₃NH-, (CF₃)₂N-, CF₃S-, CF₃C(=O)-, CF₃C(=O)O-, CF₃OC(=O)-, CF₃CONH-, or CF₃CON(CF₃)-, and more preferably CF₃O-, CF₃NH-, or (CF₃)₂N-, and
X^{A3} is a single bond, or a divalent group.
X^{A3} is preferably a single bond, a C₁₋₃₆ alkylene group, -(CH₂)_{y1}-(O)_{y2}- (wherein y1 is an integer of 1 to 200, such as an integer of 2 to 100, 5 to 100 or 10 to 50, and y2 is an integer of 1 to 100, such as an integer of 2 to 50, 3 to 30 or 5 to 10), or -(CH₂)_{y3}-phenylene-(CH₂)_{y4}-(wherein y3 is an integer of 0 to 6, such as an integer of 1 to 6, and y4 is an integer of 0 to 6, such as an integer of 1 to 6). Such a C₁₋₃₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In one embodiment, a1 is an integer of 0 to 6.

In one embodiment, b1 is an integer of 0 to 30.

In one embodiment, c1 is an integer of 0 to 10, and in another embodiment, c1 is an integer of 0 to 3.

In one embodiment, d1 is 0 or 1.

In one embodiment, e1 is 1, and in another embodiment, e1 is 2.

In one embodiment, f1 is 0 or 1.

In one embodiment, e1 is 1 or 2, d1 is 0 or 1, a1 is an integer of 0 to 200, b1 is an integer of 0 to 200, and c1 is an integer of 0 to 10. The occurrence order of the respective repeating units enclosed in parentheses provided with the signs a1, b1, c1 and d1 is not limited.

In one embodiment, e1 is 1 or 2, d1 is 0 or 1, a1 is an integer of 0 to 6, b1 is an integer of 0 to 30, and c1 is an integer of 0 to 3. The occurrence order of the respective repeating units enclosed in parentheses provided with the signs a1, b1, c1 and d1 is not limited.

In one embodiment, X^{B} is group represented by -(CFH)ₐ₁-(CH₂)_{b1}-(O)_{c1}-
wherein
a1 is an integer of 0 to 200, and preferably an integer of 0 to 6,
b1 is an integer of 0 to 200, and preferably an integer of 0 to 30,
c1 is an integer of 0 to 10, and preferably an integer of 0 to 3, and

The occurrence order of the respective repeating units enclosed in parentheses provided with the signs a1, b1, and c1 is not limited.

In one embodiment, X^{B} is a group represented by -(C(R^{A2})ₑ₁H₂₋ₑ₁)_{d1}-(CH₂)_{b1}-. R^{A2}, b1, d1 and e1 are the same as defined above.

In one embodiment, X^{B} is a group represented by -(CH₂)_{b1}-
wherein
b1 is an integer of 0 to 36, preferably an integer of 0 to 30, more preferably an integer of 1 to 9 in one embodiment, and more preferably an integer of 10 to 30, such as an integer of 10 to 25, in another embodiment.

In one embodiment, X^{B} is a group represented by -(CR^{A2}ₑ₁H₂₋ₑ₁)_{d1}-O-(CH₂)_{b1}-. R^{A2}, a1, b1, and e1 are the same as defined above.

In one embodiment, X^{B} is a group represented by -O-(CH₂)_{b1}-. b1 is the same as defined above. Preferably, b1 is an integer of 0 to 30.

In one embodiment, X^{B} is a group represented by -(CR^{A2}ₑ₁H₂₋ₑ₁)_{d1}-(CH₂)_{b1}-O-. R^{A2}, e1, b1, and d1 are the same as defined above.

In one embodiment, X^{B} is a group represented by -(CH₂)_{b1}-O-. b1 is the same as defined above. In one embodiment, b1 is an integer of 0 to 30, and in one embodiment, b1 is an integer of 0 to 10.

In one embodiment, X^{B} is a group represented by -(CH₂)_{b16}-O-(CH₂)_{b16}-. b10 is each independently an integer of 0 to 200. However, the sum of two b10 is an integer of 0 to 200.

In one embodiment, X^{B} is a group containing a divalent siloxane group. That is, X^{B} contains a structure in which two silicon atoms are bonded via oxygen (-Si-O-Si-).

In such an embodiment, X^{B} is more preferably a group represented by -(CH₂)_{g1}- R^{S}-Si(R⁵)₂-(CH₂)_{g1}-
wherein
g1 is each independently an integer of 0 to 30,
R^{S} is a group represented by the following formula: 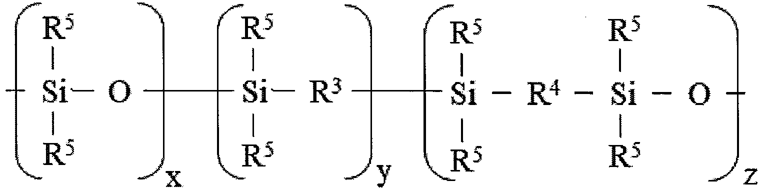
wherein
R³ is each independently a single bond, a C₁₋₁₂ alkylene group, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
R⁴ is each independently a C₁₋₁₂ alkylene group, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
R⁶ is each independently a C₁₋₆ alkylene group,
R⁷ is each independently an optionally substituted phenylene group or naphthylene group,
R⁸ is each independently a single bond, or a C₁₋₆ alkylene group,
R⁹ is each independently a single bond, an oxygen atom,
R⁵ is each independently a hydrocarbon group,
x is an integer of 0 to 200,
y is an integer of 0 to 200,
z is an integer of 0 to 200,
x + y + z is 1 or more, and
the occurrence order of the respective repeating units enclosed in parentheses provided with x, y or z is not limited.
g1 is each independently an integer of 0 to 30. g1 is, for example, an integer of 1 to 30, an integer of 1 to 10, or an integer of 1 to 3. In one embodiment, g1 is 0.
R³ is each independently a single bond, a C₁₋₁₂ alkylene group, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-, and preferably a C₁₋₁₂ alkylene group, or -R⁶-O-R⁶-.

In one embodiment, R³ is each independently a single bond.

In another embodiment, R³ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-, and preferably a C₁₋₁₂ alkylene group or -R⁶-O-R⁶-.

R⁴ is each independently a C₁₋₁₂ alkylene group, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-.

In one embodiment, R⁴ is each independently a C₁₋₁₂ alkylene group or -R⁶-O-R⁶-.

In another embodiment, R⁴ is each independently -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-.

In one embodiment, R³ is each independently a C₁₋₁₂ alkylene group or -R⁶-O-R⁶-, and R⁴ is each independently a C₁₋₁₂ alkylene group or -R⁶-O-R⁶-.

In another embodiment, R³ is each independently a C₁₋₁₂ alkylene group or -R⁶-O-R⁶-, and R⁴ is each independently -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-.

The C₁₋₁₂ alkylene group may be linear or may be branched. The C₁₋₁₂ alkylene group is preferably linear.

The C₁₋₁₂ alkylene group is preferably a C₂₋₈ alkylene group, and more preferably a C₂₋₆ alkylene group.

R⁶ is each independently a C₁₋₆ alkylene group. The C₁₋₆ alkylene group may be linear or may be branched. The C₁₋₆ alkylene group is preferably linear.

The C₁₋₆ alkylene group is preferably a C₂₋₄ alkylene group, and more preferably a C₂₋₃ alkylene group.

In a preferred embodiment, in a group containing a plurality of R⁶, all R⁶ are the same group.

R⁷ is each independently an optionally substituted arylene group.

In one embodiment, R⁷ is each independently

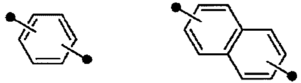

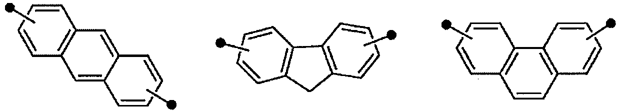

In one embodiment, R⁷ is a phenylene group.

In another embodiment, R⁷ is a naphthylene group.

The arylene group may have a substituent. The number of substituents is not limited, and it is, for example, 1 to 4, and preferably 1 or 2.

In one embodiment, the phenylene group and the naphthylene group may have a substituent. The number of substituents is not limited, and it is, for example, 1 to 4, and preferably 1 or 2. As the substituted phenylene group, 2,5-substituted phenylene is preferred.

The substituent with respect to the arylene group is each independently -R⁴¹-R⁴².

R⁴¹ is a single bond, an oxygen atom, or a sulfur atom, preferably a single bond or an oxygen atom, and more preferably an oxygen atom.

R⁴² is a C₁₋₁₂ alkyl group, -(O-R⁴³)ₚ, -R⁴⁴-R⁴⁵, or -R⁴⁴-OR⁴⁶, all of which are optionally substituted with a halogen.

The halogen is fluorine, chlorine, bromine, or iodine, and is preferably fluorine.

The C₁₋₁₂ alkyl group in R⁴² may be linear or may be branched.

R⁴³ is a C₁₋₆ alkylene group, and preferably a C₂₋₄ alkylene group. Such an alkylene group may be linear or may be branched.

R⁴⁴ is a C₁₋₁₂ alkylene group, and preferably a C₁₋₆ alkylene group. Such an alkylene group may be linear or may be branched.

R⁴⁵ is -CH=CH₂ or -OCOCH=CH₂.

R⁴⁶ is a hydrogen atom or a C₁₋₆ alkyl group. Such an alkyl group may be linear or may be branched. The C₁₋₆ alkyl group is preferably a C₁₋₃ alkyl group, more preferably a C₁₋₂ alkyl group, and still more preferably a methyl group.

R⁸ is each independently a single bond or a C₁₋₆ alkylene group. Such a C₁₋₆ alkylene group may be linear or may be branched.

In one embodiment, R⁸ is a single bond.

In another embodiment, R⁸ is a C₁₋₆ alkylene group.

R⁹ is each independently a single bond or an oxygen atom.

In one embodiment, R⁹ is a single bond.

In another embodiment, R⁹ is an oxygen atom.

R⁵ is each independently a hydrocarbon group. Such a hydrocarbon group is optionally substituted.

R⁵ is, each independently, preferably an unsubstituted hydrocarbon group or a hydrocarbon group substituted with a halogen atom. Such a halogen atom is preferably a fluorine atom.

R⁵ is, each independently, preferably a C₁₋₁₈ alkyl group or aryl group optionally substituted with a halogen atom, and more preferably a C₁₋₁₈ alkyl group or aryl group.

The C₁₋₁₈ alkyl group may be linear or may be branched, and is preferably linear. The C₁₋₁₈ alkyl group is preferably a C₁₋₁₀ alkyl group, more preferably a C₁₋₆ alkyl group, still more preferably a C₁₋₄ alkyl group, and even more preferably a methyl group.

The aryl group is preferably a phenyl group.

In one embodiment, R⁵ is each independently a C₁₋₆ alkyl group, preferably a C₁₋₄ alkyl group, and more preferably a methyl group.

In another embodiment, R⁵ is a phenyl group.

In another embodiment, R⁵ is each independently a methyl group or a phenyl group, and preferably a methyl group.

x is an integer of 0 to 200, preferably an integer of 0 to 100, more preferably an integer of 1 to 100, still more preferably an integer of 5 to 50, and even more preferably an integer of 10 to 30.

In one embodiment, x is 0.

In one embodiment, x is 1 to 200, preferably an integer of 1 to 100, more preferably an integer of 5 to 50, and still more preferably an integer of 10 to 30.

y is an integer of 0 to 200, preferably an integer of 0 to 100, more preferably an integer of 1 to 100, still more preferably an integer of 5 to 50, and even more preferably an integer of 10 to 30.

In one embodiment, y is 0.

In one embodiment, y is 1 to 200, preferably an integer of 1 to 100, more preferably an integer of 5 to 50, and still more preferably an integer of 10 to 30.

z is an integer of 0 to 200, preferably an integer of 0 to 100, more preferably an integer of 1 to 100, still more preferably an integer of 5 to 50, and even more preferably an integer of 10 to 30.

In one embodiment, z is 0.

In one embodiment, z is 1 to 200, preferably an integer of 1 to 100, more preferably an integer of 5 to 50, and still more preferably an integer of 10 to 30.

In one embodiment, y is 0 and z is 0.

The divalent siloxane containing group may be a random polymer or may be a block polymer.

In one embodiment, X^{B} is a group represented by -(CH₂)_{c11}-(O(CH₂)_{c12})_{c13}-.

c11 is an integer of 0 to 200, c12 is an integer of 0 to 200, and c13 is an integer of 0 to 200. However, the number of carbon atoms contained in X^{B} is an integer of 0 to 200. For example, c12 and c13 are each an integer of 1 or more.

For example, c11 is an integer of 1 to 4, c12 is an integer of 1 to 10, c13 is an integer of 1 to 150.

In one embodiment, the number of carbon atoms contained in X^{B} is an integer of 1 to 150.

In one embodiment, c11 is an integer of 0 to 20, c12 is an integer of 1 to 6, c13 is an integer of 0 to 150, preferably c13 is an integer of 1 to 50, and the number of carbon atoms contained in X^{B} is an integer of 1 to 150.

In one embodiment, c11 is an integer of 1 to 30, c12 is an integer of 1 to 3, and c13 is an integer of 2 to 150, such as an integer of 2 to 50.

α1 is an integer of 1 to 9, and α2 is an integer of 1 to 9. These α1 and α2 may vary depending on the valence of X^{A}. The sum of α1 and α2 is the same as the valence of X^{A}. For example, when X^{A} is a decavalent organic group, the sum of α1 and α2 is 10; for example, a case where α1 is 9 and α2 is 1, α1 is 5 and α2 is 5, or α1 is 1 and α2 is 9 can be considered. Also, when X^{A} is a divalent organic group, α1 and α2 are 1.

X^{A} is a single bond, an oxygen atom, or a di- to decavalent organic group. Note that X^{A} is bonded to Rf¹ on its left side and to R^{Si} on its right side, respectively.

In one embodiment, when the element in Rf¹ which is bonded to X^{A} is an oxygen atom, the element in X^{A} which is bonded to Rf¹ is not oxygen.

X^{A} is interpreted as a linker connecting the Rf¹ moiety to the moiety that provides a binding ability to the substrate (R^{Si} moiety). Accordingly, such X^{A} may be a single bond, an oxygen atom, or any organic group as long as the compound represented by the formula (1) can stably exist.

X^{A} is each independently optionally substituted with one or more substituents selected from a fluorine atom, a C₁₋₃ alkyl group, and a C₁₋₃ fluoroalkyl group (preferably a C₁₋₃ perfluoroalkyl group). In one embodiment, X^{A} is unsubstituted.

The di- to decavalent organic group in X^{A} is preferably a di- to octavalent organic group. In one embodiment, such a di- to decavalent organic group is preferably a di- to tetravalent organic group, and more preferably a divalent organic group. In another embodiment, such a di- to decavalent organic group is preferably a tri- to octavalent organic group, and more preferably a tri- to hexavalent organic group.

In one embodiment, X^{A} is a single bond.

In one embodiment, X^{A} is an oxygen atom.

In one embodiment, X^{A} is a di- to decavalent organic group.

In one embodiment, X^{A} is a single bond or a divalent organic group, and α1 and α2 are 1.

In one embodiment, X^{A} is a divalent organic group, and α1 and α2 are 1.

In one embodiment, X^{A} is a tri- to hexavalent organic group, α1 is 1, and α2 is 2 to 5.

In one embodiment, X^{A} is a trivalent organic group, α1 is 1, and α2 is 2.

In one embodiment, X^{A} is a trivalent organic group, α1 is 2, and α2 is 1.

In one embodiment, X^{A} is a single bond, -(X⁵²)₁₅-, or is represented by the following formula (X^{A1}):

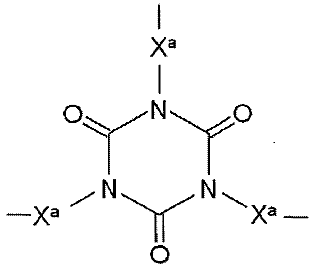

X⁵² is each independently a group selected from -O-, -S-, an o-, m- or p-phenylene group, -CO-, -C(O)O-, -OC(O)-, -CONR⁵⁴-, -NR⁵⁴CO-, -O-CONR⁵⁴-, -NR⁵⁴CO-O-, - NR⁵⁴CONR⁵⁴-, -NR⁵⁴-, and -(CH₂)ₙ₅-.

R⁵⁴ is each independently a hydrogen atom or a monovalent organic group, and is preferably a hydrogen atom, a phenyl group, a C₁₋₆ alkyl group (preferably a methyl group), or an oxyalkylene containing group having 1 to 10 carbon atoms.

n5 is each independently an integer of 1 to 200. n5 is, for example, an integer of 1 to 30, specifically an integer of 1 to 20, and more specifically an integer of 1 to 15, an integer of 1 to 10, or an integer of 1 to 6, such as an integer of 1 to 3. In one embodiment, n5 is an integer of 10 to 200, such as an integer of 10 to 30. In one embodiment, n5 is an integer of 1 to 9. In one embodiment, n5 is an integer of 10 to 30. In one embodiment, n5 is an integer of 16 to 26.

The oxyalkylene containing group having 1 to 10 carbon atoms is a group containing a -O-C₁₋₁₀ alkylene-, and is, for example, -R⁵⁵-(-O-C₁₋₁₀ alkylene)ₙ-R⁵⁶ (wherein R⁵⁵ is a single bond or a divalent organic group, preferably a C₁₋₆ alkylene group, n is an arbitrary integer, preferably an integer of 2 to 10, and R⁵⁶ is a hydrogen atom or a monovalent organic group, preferably a C₁₋₆ alkyl group). The alkylene group may be linear or may be branched.

X^{a} is a single bond or divalent linking group directly bonded to the isocyanuric ring. X^{a} is preferably a single bond, an alkylene group, or a divalent group containing at least one bond selected from the group consisting of an ether bond, an ester bond, an amide bond, and a sulfide bond, and more preferably a single bond, an alkylene group having 1 to 10 carbon atoms, or a divalent hydrocarbon group having 1 to 10 carbon atoms and containing at least one bond selected from the group consisting of an ether bond, an ester bond, an amide bond, and a sulfide bond. X^{a} is bonded to the isocyanuric ring on its left side.

One to two groups having X^{a} are bonded to the Rf¹ group, and one to two groups having X^{a} are bonded to the R^{Si} group. However, the total number of groups having X^{a} is 3.

X^{a} is still more preferably a group represented by the following formula:

-(CX¹²¹X¹²²)ₓ₁-(X^{a11})_{y1}-(CX¹²³X¹²⁴)_{z1}-

wherein
X¹²¹ to X¹²⁴ are each independently H, OH, or -OSi(OR¹²¹)₃ (wherein three R¹²¹ groups are each independently an alkyl group having 1 to 4 carbon atoms);
X^{a11} is -C(=O)NH-, -NHC(=O)-, -O-, -C(=O)O-, -OC(=O)-, -OC(=O)O-, - NHC(=O)NH-, -NR¹²²-, -C(=O)-NR¹²²-, -NR¹²²-C(=O)-, or S (each bond is bonded to CX¹²¹X¹²² on its left side);
R¹²² is a C₁₋₆ hydrocarbon chain, preferably a C₁₋₆ alkyl group; and
x1 is an integer of 0 to 10, y1 is 0 or 1, and z1 is an integer of 1 to 10.

As X^{a11}, -O-, or -C(=O)O- is preferred.

As X^{a}, the groups represented by the following formulae are preferred:

-(CH₂)ₘ₁₂-O-(CH₂)ₘ₁₃-

wherein m12 is an integer of 1 to 10, and m13 is an integer of 1 to 10,

   -(CH₂)ₘ₁₅-O-CH₂CH(OH)-(CH₂)ₘ₁₆-
wherein m15 is an integer of 1 to 10, and m16 is an integer of 1 to 10,

   -(CH₂)ₘ₁₈-
wherein m18 is an integer of 1 to 10, or

   -(CH₂)ₘ₂₀-O-CH₂CH(OSi(OCH₃)₃)-(CH₂)ₘ₂₁-
wherein m20 is an integer of 1 to 10, and m21 is an integer of 1 to 10.

X^{a} is not limited, and examples thereof include
-CH₂-, -C₂H₄-, -C₃H₆-, -C₄H₈-, -C₄H₈-O-CH₂-, -CO-O-CH₂-CH(OH)-CH₂-, -S-, -NR¹²¹-, -(CH₂)ₘ₂₂-C(=O)-O-(CH₂)ₘ₂₃-, -(CH₂)ₘ₂₂-O-C(=O)-(CH₂)ₘ₂₃-, -(CH₂)ₘ₂₂-C(=O)-NR¹²¹-(CH₂)ₘ₂₃-, and -(CH₂)ₘ₂₂-NR¹²¹-C(=O)-(CH₂)ₘ₂₃-CH₂OCH₂CH(OSi(OCH₃)₃)CH₂- wherein R¹²¹ is a C₁₋₆ hydrocarbon chain, m22 is an integer of 1 to 10, and m23 is an integer of 1 to 10.

When X^{A} is a single bond, an oxygen atom, or a divalent organic group, the formula (1) is represented by the following formula (1').

Rf¹-X^{A}-R^{Si} ··· (1')

X^{A} is preferably a single bond or a divalent organic group.

In one embodiment, X^{A} is each independently represented by -(X⁵²)ₗ₅-R⁵²-. R⁵² is a single bond, -(CH₂)ₜ₅-, or an o-, m- or p-phenylene group, and is preferably -(CH₂)ₜ₅-. t5 is an integer of 1 to 30, preferably an integer of 2 to 20, more preferably an integer of 2 to 12, and still more preferably an integer of 2 or 3. Here, R⁵² (typically a hydrogen atom in R⁵²) is optionally substituted with one or more substituents selected from a fluorine atom, a C₁₋₃ alkyl group, and a C₁₋₃ fluoroalkyl group. In a preferred embodiment, R⁵² is not substituted with any of these groups.

For example, X^{A} may be each independently
a single bond,

-CONR⁵⁴-(CH₂)ₙ₅-,

-(CH₂)ₙ₅-CONR⁵⁴-(CH₂)ₙ₅-,

-(CH₂)ₙ₅-CONR⁵⁴-,

-(CH₂)ₙ₅-,

-OC(=O)-(CH₂)ₙ₅-,

-(CH₂)ₙ₅-OC(=O)-(CH₂)ₙ₅-

-C(=O)O-(CH₂)ₙ₅-,

-(CH₂)ₙ₅-C(=O)O-(CH₂)ₙ₅-

-C(=O)-(CH₂)ₙ₅-,

-(CH₂)ₙ₅-C(=O)-(CH₂)ₙ₅-.

In one embodiment, X^{A} may be each independently
a single bond,

-CONR⁵⁴-(CH₂)ₙ₅-,

-OC(=O)-(CH₂)ₙ₅-,

-C(=O)-(CH₂)ₙ₅-.

In one embodiment, X⁵² is each independently a group selected from -S-, an o-, m- or p-phenylene group, -CO-, -C(O)O-, -OC(O)-, -CONR⁵⁴-, -O-CONR⁵⁴-, -NR⁵⁴CO-, -O-CONR⁵⁴-, -NR⁵⁴CO-O-, and -NR⁵⁴-.

In one embodiment, X⁵² is -(CH₂)ₙ₅-CONR⁵³-.

In one embodiment, X^{A} is a compound represented by -(p-phenylene)ᵥ₁-(CH₂)ᵥ₂- R⁵⁷ᵥ₃-(CH₂)ᵥ₄-
wherein
R⁵⁷ is -CONH-, -NHCO-, -COO-, or -O-,
v1 is 0 or 1,
v2 is an integer of 0 to 20,
v3 is 0 or 1, and
v4 is an integer of 2 to 20.

In a preferred embodiment, X^{A} is a compound represented by -(p-phenylene)ᵥ₁- (CH2)ᵥ₂-R⁵⁷ᵥ₃-(CH2)ᵥ₄-
wherein
R⁵⁷ is -NHCO-, or -COO-,
v1 is 1,
v2 is an integer of 0 to 3,
v3 is 1, and
v4 is an integer of 8 to 16.

In a preferred embodiment, X^{A} is a compound represented by -(CH₂)ᵥ₂-CONH- (CH₂)ᵥ₄-
wherein
v2 is an integer of 10 to 22, and
v4 is an integer of 1 to 3.

In one embodiment, X^{A} is a compound represented by -(CH₂)ᵥ₂-O-(CH₂)ᵥ₄-
wherein
v2 is an integer of 1 to 3, and
v4 is an integer of 10 to 22.

In one embodiment, X^{A} is a group represented by the following formula.

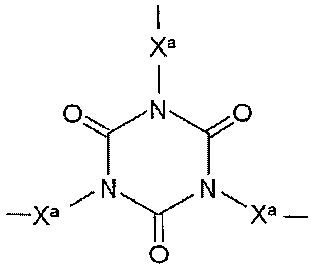

R^{Si} is a monovalent group containing a Si atom to which a hydroxyl group or a hydrolyzable group is bonded.

R^{Si} is a group represented by the following formula (S1), (S2), (S3), (S4), or (S5):

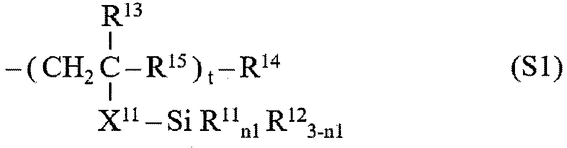

-SiR¹¹ₙ₁R¹²₃₋ₙ₁ (S2)

- SiR^{a1}ₖ₁R^{b1}ₗ₁R^{c1}ₘ₁ (S3)

- CR^{d1}ₖ₂R^{e1}ₗ₂R^{f1}ₘ₂ (S4)

-NR^{g1}ₖ₃R^{h1}ₗ₃ (S5)

.

R¹¹ is each independently a hydroxyl group or a hydrolyzable group.

R¹¹ is preferably, each independently, a hydrolyzable group.

R¹² is each independently a monovalent organic group. However, R¹² does not contain the hydrolyzable group.

In R¹², the monovalent organic group is preferably a C₁₋₂₀ alkyl group, more preferably a C₁₋₆ alkyl group, and even more preferably a methyl group.

n1 is each independently an integer of 0 to 3 for each (SiR¹¹ₙ₁R¹²₃₋ₙ₁) unit. However, in the formula (S1), at least two (SiR¹¹ₙ₁R¹²₃₋ₙ₁) units with n1 of 1 to 3 are present. In other words, in the formula (S1), at least two Si atoms to which a hydroxyl group or a hydrolyzable group is bonded are present.

n1 is each independently an integer of preferably 1 to 3, more preferably 2 to 3, and still more preferably 3 for each (SiR¹¹ₙ₁R¹²₃₋ₙ₁) unit.

In the formulae, X¹¹ is each independently a single bond or a divalent organic group. Such a divalent organic group is preferably -R²⁸-Oₓ-R²⁹- (wherein R²⁸ and R²⁹ are each independently a single bond or a C₁₋₂₀ alkylene group, and x is 0 or 1). Such a C₁₋₂₀ alkylene group may be linear or may be branched, and is preferably linear. Such a C₁₋₂₀ alkylene group is preferably a C₁₋₁₀ alkylene group, more preferably a C₁₋₆ alkylene group, and still more preferably a C₁₋₃ alkylene group.

In one embodiment, X¹¹ is each independently a -C₁₋₆ alkylene-O-C₁₋₆ alkylene- or a -O-C₁₋₆ alkylene-.

In a preferred embodiment, X¹¹ is each independently a single bond or a linear C₁₋₆ alkylene group, preferably a single bond or a linear C₁₋₃ alkylene group, more preferably a single bond or a linear C₁₋₂ alkylene group, and still more preferably a linear C₁₋₂ alkylene group.

R¹³ is each independently a hydrogen atom or a monovalent organic group. Such a monovalent organic group is preferably a C₁₋₂₀ alkyl group.

In a preferred embodiment, R¹³ is each independently a hydrogen atom or a linear C₁₋₆ alkyl group, preferably a hydrogen atom or a linear C₁₋₃ alkyl group, and preferably a hydrogen atom or a methyl group.

R¹⁵ is each independently a single bond, an oxygen atom, a C₁₋₆ alkylene group, or a C₁₋₆ alkyleneoxy group.

In one embodiment, R¹⁵ is each independently an oxygen atom, a C₁₋₆ alkylene group, or a C₁₋₆ alkyleneoxy group having 1 to 6 carbon atoms.

In a preferred embodiment, R¹⁵ is a single bond.

t is each independently an integer of 2 or more.

In a preferred embodiment, t is each independently an integer of 2 to 10, and preferably an integer of 2 to 6.

R¹⁴ is each independently a hydrogen atom, a halogen atom, or -X¹¹-SiR¹¹ₙ₁R¹²₃₋ₙ₁. Such a halogen atom is preferably an iodine atom, a chlorine atom, or a fluorine atom, and more preferably a fluorine atom. In a preferred embodiment, R¹⁴ is a hydrogen atom.

In one embodiment, the formula (S1) is the following formula (S1-a): 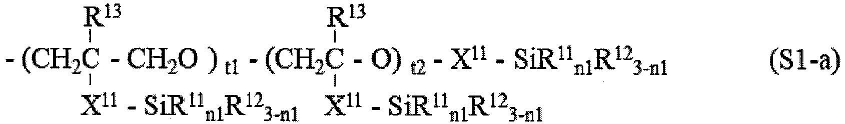 wherein
R¹¹, R¹², R¹³, X¹¹, and n1 have the same definition as described for the above formula (S1);
t1 and t2 are each independently an integer of 1 or more, preferably an integer of 1 to 10, and more preferably an integer of 2 to 10, such as an integer of 1 to 5 or an integer of 2 to 5; and
the occurrence order of the respective repeating units enclosed in parentheses provided with t1 and t2 is not limited in the formula.

In a preferred embodiment, the formula (S1) is the following formula (S1-b): 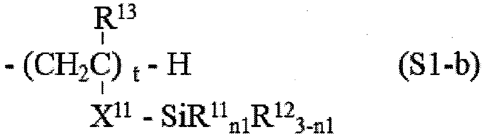 wherein R¹¹, R¹², R¹³, X¹¹, n1, and t have the same definition as described for the above formula (S1).

In a preferred embodiment, in the formula (S2), the Si atom in -SiR¹¹ₙ₁R¹²₃₋ₙ₁ does not form a siloxane bond.

R^{a1} is each independently -Z¹-SiR²¹ₚ₁R²²_{q1}R²³ᵣ₁.

Z¹ is each independently an oxygen atom or a divalent organic group. Note that the structure denoted as Z¹ hereinafter is bonded to (SiR²¹ₚ₁R²²_{q1}R²³ᵣ₁) on its right side.

In a preferred embodiment, Z¹ is a divalent organic group.

In a preferred embodiment, Z¹ does not include a group that forms a siloxane bond with the Si atom to which Z¹ is bonded. Preferably, in the formula (S3), (Si-Z^{1"}-Si) does not contain a siloxane bond.

Z¹ is preferably a C₁₋₃₀ alkylene group, -(CH₂)_{z1}-O-(CH₂)_{z2}- (wherein z1 is an integer of 0 to 30, such as an integer of 1 to 20, an integer of 0 to 6 or an integer of 1 to 6, and z2 is an integer of 0 to 30, such as an integer of 1 to 20, an integer of 0 to 6 or an integer of 1 to 6), or -(CH₂)_{z3}-phenylene-(CH₂)_{z4}- (wherein z3 is an integer of 0 to 30, such as an integer of 1 to 20, an integer of 0 to 6 or an integer of 1 to 6, and z4 is an integer of 0 to 30, such as an integer of 1 to 20, an integer of 0 to 6 or an integer of 1 to 6). Such a C₁₋₃₀ alkylene group may be linear or may be branched, and is preferably linear. These groups are optionally substituted with, for example, one or more substituents selected from a fluorine atom, a C₁₋₃₀ alkyl group, a C₂₋₃₀ alkenyl group, and a C₂₋₃₀ alkynyl group, and are preferably unsubstituted.

In a preferred embodiment, Z¹ is a C₁₋₆ alkylene group or -(CH₂)_{z3}-phenylene-(CH₂)_{z4}-, preferably -phenylene-(CH₂)_{z4}-.

In another preferred embodiment, Z¹ is a C₁₋₃ alkylene group. In one embodiment, Z¹ may be -CH₂CH₂CH₂-. In another embodiment, Z¹ may be -CH₂CH₂-. In another embodiment, Z¹ may be -CH₂CH₂CH₂CH₂CH₂CH₂CH₂CH₂CH₂CH₂CH₂.

R²¹ is each independently -Z^{1'}-SiR^{21'}_{p1'}R^{22'}_{q1'}R^{23'}_{r1'}.

Z^{1'} is each independently an oxygen atom or a divalent organic group. Note that the structure denoted as Z^{1'} hereinafter is bonded to (SiR^{21'}_{p1'}R^{22'}_{q1'}R^{23'}_{r1'}) on its right side.

In a preferred embodiment, Z^{1'} is a divalent organic group.

In a preferred embodiment, Z^{1'} does not include a group that forms a siloxane bond with the Si atom to which Z^{1'} is bonded. Preferably, in the formula (S3), (Si-Z^{1'}-Si) does not contain a siloxane bond.

Z^{1'} is preferably a C₁₋₃₀ alkylene group, -(CH₂)_{z1'}-O-(CH₂)_{z2'}- (wherein z1' is an integer of 0 to 30, such as an integer of 1 to 20, an integer of 0 to 6 or an integer of 1 to 6, and z2' is an integer of 0 to 30, such as an integer of 1 to 20, an integer of 0 to 6 or an integer of 1 to 6), or -(CH₂)_{z3'}-phenylene-(CH₂)_{z4'}- (wherein z3' is an integer of 0 to 30, such as an integer of 1 to 20, an integer of 0 to 6 or an integer of 1 to 6, and z4' is an integer of 0 to 30, such as an integer of 1 to 20, an integer of 0 to 6 or an integer of 1 to 6). Such a C₁₋₃₀ alkylene group may be linear or may be branched, and is preferably linear. These groups are optionally substituted with, for example, one or more substituents selected from a fluorine atom, a C₁₋₃₀ alkyl group, a C₂₋₃₀ alkenyl group, and a C₂₋₃₀ alkynyl group, and are preferably unsubstituted.

In a preferred embodiment, Z^{1'} is a C₁₋₆ alkylene group or -(CH₂)_{z3'}-phenylene-(CH₂)_{z4'}-, preferably -phenylene-(CH₂)_{z4'}-.

In another preferred embodiment, Z^{1'} is a C₁₋₃ alkylene group. In one embodiment, Z^{1'} may be -CH₂CH₂CH₂-. In another embodiment, Z^{1'} may be -CH₂CH₂-. In another embodiment, Z^{1'} may be -CH₂CH₂CH₂CH₂CH₂CH₂CH₂CH₂CH₂CH₂CH₂.

R^{21'} is each independently -Z^{1"}-SiR^{22"}_{q1"}R^{23"}_{r1"}.

Z^{1"} is each independently an oxygen atom or a divalent organic group. Note that the structure denoted as Z^{1"} hereinafter is bonded to (SiR^{22"}_{q1"}R^{23"}_{r1"}) on its right side.

In a preferred embodiment, Z^{1"} is a divalent organic group.

In a preferred embodiment, Z^{1"} does not include a group that forms a siloxane bond with the Si atom to which Z^{1"} is bonded. Preferably, in the formula (S3), (Si-Z^{1"}-Si) does not contain a siloxane bond.

Z^{1"} is preferably a C₁₋₃₀ alkylene group, -(CH₂)_{z1"}-O-(CH₂)_{z2"}- (wherein z1" is an integer of 0 to 30, such as an integer of 1 to 20, an integer of 0 to 6 or an integer of 1 to 6, and z2" is an integer of 0 to 30, such as an integer of 1 to 20, an integer of 0 to 6 or an integer of 1 to 6), or -(CH₂)_{z3"}-phenylene-(CH₂)_{z4"}- (wherein z3" is an integer of 0 to 30, such as an integer of 1 to 20, an integer of 0 to 6 or an integer of 1 to 6, and z4" is an integer of 0 to 30, such as an integer of 1 to 20, an integer of 0 to 6 or an integer of 1 to 6). Such a C₁₋₃₀ alkylene group may be linear or may be branched, and is preferably linear. These groups are optionally substituted with, for example, one or more substituents selected from a fluorine atom, a C₁₋₃₀ alkyl group, a C₂₋₃₀ alkenyl group, and a C₂₋₃₀ alkynyl group, and are preferably unsubstituted.

In a preferred embodiment, Z^{1"} is a C₁₋₆ alkylene group or -(CH₂)_{z3"}-phenylene-(CH₂)_{z4"}-, preferably -phenylene-(CH₂)_{z4"}-. When Z^{1"} is such a group, light resistance, in particular ultraviolet resistance, can be further enhanced.

In another preferred embodiment, Z^{1"} is a C₁₋₃ alkylene group. In one embodiment, Z^{1"} may be -CH₂CH₂CH₂-. In another embodiment, Z^{1"} may be -CH₂CH₂-. In another embodiment, Z^{1"} may be -CH₂CH₂CH₂CH₂CH₂CH₂CH₂CH₂CH₂CH₂CH₂.

R^{22"} is each independently a hydroxyl group or a hydrolyzable group.

R^{22"} is preferably, each independently, a hydrolyzable group.

R^{23"} is each independently a monovalent organic group. Such a monovalent organic group is a monovalent organic group excluding the above hydrolyzable group.

In R^{23"}, the monovalent organic group is preferably a C₁₋₂₀ alkyl group, more preferably a C₁₋₆ alkyl group, and still more preferably a methyl group.

q1" is each independently an integer of 0 to 3, and r1" is each independently an integer of 0 to 3. The sum of q1" and r1" is 3 in the (SiR^{22"}_{q1"}R^{23"}_{r1"}) unit.

q1" is each independently an integer of preferably 1 to 3, more preferably 2 to 3, and still more preferably 3 for each (SiR^{22"}_{q1"}R^{23"}_{r1"}) unit.

R^{22'} is each independently a hydroxyl group or a hydrolyzable group.

R^{22'} is preferably, each independently, a hydrolyzable group.

R^{23'} is each independently a monovalent organic group. Such a monovalent organic group is a monovalent organic group excluding the above hydrolyzable group.

In R^{23'}, the monovalent organic group is preferably a C₁₋₂₀ alkyl group, more preferably a C₁₋₆ alkyl group, and even more preferably a methyl group.

p1' is each independently an integer of 0 to 3, q1' is each independently an integer of 0 to 3, and r1' is each independently an integer of 0 to 3. The sum of p', q1', and r1' is 3 in the (SiR^{21'}_{p1'}R^{22'}_{q1'}R^{23'}_{r1'}) unit.

In one embodiment, p1' is 0.

In one embodiment, p1' may be each independently an integer of 1 to 3, an integer of 2 to 3, or 3 for each (SiR^{21'}_{p1'}R^{22'}_{q1'}R^{23'}_{r1'}) unit. In a preferred embodiment, p1' is 3.

In one embodiment, q1' is each independently an integer of 1 to 3, preferably an integer of 2 to 3, and more preferably 3 for each (SiR^{21'}_{p1'}R^{22'}_{q1'}R^{23'}_{r1'}) unit.

In one embodiment, p1' is 0, and q1' is each independently an integer of 1 to 3, preferably an integer of 2 to 3, and even more preferably 3 for each (SiR^{21'}_{p1'}R^{22'}_{q1'}R^{23'}_{r1'}) unit.

R²² is each independently a hydroxyl group or a hydrolyzable group.

R²² is preferably, each independently, a hydrolyzable group.

R²³ is each independently a monovalent organic group. Such a monovalent organic group is a monovalent organic group excluding the hydrolyzable group.

In R²³, the monovalent organic group is preferably a C₁₋₂₀ alkyl group, more preferably a C₁₋₆ alkyl group, and still more preferably a methyl group.

p1 is each independently an integer of 0 to 3, q1 is each independently an integer of 0 to 3, and r1 is each independently an integer of 0 to 3. The sum of p1, q1, and r1 is 3 in the (SiR²¹ₚ₁R²²_{q1}R²³ᵣ₁) unit.

In one embodiment, p1 is 0.

In one embodiment, p1 may be each independently an integer of 1 to 3, an integer of 2 to 3, or 3 for each (SiR²¹ₚ₁R²²_{q1}R²³ᵣ₁) unit. In a preferred embodiment, p1 is 3.

In one embodiment, q1 is each independently an integer of 1 to 3, preferably an integer of 2 to 3, and more preferably 3 for each (SiR²¹ₚ₁R²²_{q1}R²³ᵣ₁) unit.

In one embodiment, p1 is 0, and q1 is each independently an integer of 1 to 3, preferably an integer of 2 to 3, and still more preferably 3 for each (SiR²¹ₚ₁R²²_{q1}R²³ᵣ₁) unit.

R^{b1} is each independently a hydroxyl group or a hydrolyzable group.

R^{b1} is preferably, each independently, a hydrolyzable group.

R^{c1} is each independently a monovalent organic group. Such a monovalent organic group is a monovalent organic group excluding the above hydrolyzable group.

In R^{c1}, the monovalent organic group is preferably a C₁₋₂₀ alkyl group, more preferably a C₁₋₆ alkyl group, and still more preferably a methyl group.

k1 is each independently an integer 0 to 3, 11 is each independently an integer of 0 to 3, and m1 is each independently an integer of 0 to 3. Note that the sum of k1, 11, and m1 is 3 in the (SiR^{a1}ₖ₁R^{b1}ₗ₁R^{c1}ₘ₁) unit.

In one embodiment, k1 is each independently an integer of 1 to 3, preferably 2 or 3, and more preferably 3 for each (SiR^{a1}ₖ₁R^{b1}ₗ₁R^{c1}ₘ₁) unit. In a preferred embodiment, k1 is 3.

In the formula (S3), at least two Si atoms to which a hydroxyl group or a hydrolyzable group is bonded are present.

In a preferred embodiment, in the end moiety of the formula (S3), at least two Si atoms to which a hydroxyl group or a hydrolyzable group is bonded are present.

In a preferred embodiment, the group represented by the formula (S3) has any one of -Z¹-SiR²²_{q1}R²³ᵣ₁ (wherein q1 is an integer of 1 to 3, preferably 2 or 3, and more preferably 3, and r1 is an integer of 0 to 2), -Z^{1'}-SiR^{22'}_{q1'}R^{23'}_{r1'} (wherein q1' is an integer of 1 to 3, preferably 2 or 3, and more preferably 3, and r1' is an integer of 0 to 2), and - Z^{1"}-SiR^{22"}_{q1"}R^{23"}_{r1"} (wherein q1" is an integer of 1 to 3, preferably 2 or 3, and more preferably 3, and r1" is an integer of 0 to 2). Z¹, Z^{1'}, Z^{1"}, R²², R²³, R^{22'}, R^{23'}, R^{22"}, and R^{23"} are the same as defined above.

In a preferred embodiment, when R^{21'} is present in the formula (S3), q1" is an integer of 1 to 3, preferably 2 or 3, and more preferably 3 in at least one, preferably all of R^{21'} groups.

In a preferred embodiment, when R²¹ is present in the formula (S3), p1' is 0, and q1' is an integer of 1 to 3, preferably 2 or 3, and more preferably 3 in at least one, preferably all of R²¹ groups.

In a preferred embodiment, when R^{a1} is present in the formula (S3), p1 is 0, and q1 is an integer of 1 to 3, preferably 2 or 3, and more preferably 3 in at least one, preferably all of R^{a1} groups.

In a preferred embodiment, in the formula (S3), k1 is 2 or 3, preferably 3, p1 is 0, and q1 is 2 or 3, preferably 3.

R^{d1} is each independently -Z²-CR³¹ₚ₂R³²_{q2}R³³ᵣ₂.

Z² is each independently a single bond, an oxygen atom, or a divalent organic group. Note that the structure denoted as Z² hereinafter is bonded to (CR³¹ₚ₂R³²_{q2}R³³ᵣ₂) on its right side.

In a preferred embodiment, Z² is a divalent organic group.

In a preferred embodiment, Z² does not contain a siloxane bond.

Z² is preferably a C₁₋₃₀ alkylene group, -(CH₂)_{z5}-O-(CH₂)_{z6}- (wherein z5 is an integer of 0 to 30, such as an integer of 1 to 206, an integer of 0 to 6 or an integer of 1 to 6, and z6 is an integer of 0 to 30, such as an integer of 1 to 20, an integer of 0 to 6 or an integer of 1 to 6), or -(CH₂)_{z7}-phenylene-(CH₂)_{z8}- (wherein z7 is an integer of 0 to 30, such as an integer of 1 to 20, an integer of 0 to 6 or an integer of 1 to 6, and z8 is an integer of 0 to 30, such as an integer of 1 to 20, an integer of 0 to 6 or an integer of 1 to 6). Such a C₁₋₃₀ alkylene group may be linear or may be branched, and is preferably linear. These groups are optionally substituted with, for example, one or more substituents selected from a fluorine atom, a C₁₋₃₀ alkyl group, a C₂₋₃₀ alkenyl group, and a C₂₋₃₀ alkynyl group, and are preferably unsubstituted.

In a preferred embodiment, Z² is a C₁₋₆ alkylene group or -(CH₂)_{z7}-phenylene-(CH₂)_{z8}-, preferably -phenylene-(CH₂)_{z8}-. When Z² is such a group, light resistance, in particular ultraviolet resistance, can be further enhanced.

In another preferred embodiment, Z² is a C₁₋₃ alkylene group. In one embodiment, Z² may be -CH₂CH₂CH₂-. In another embodiment, Z² may be -CH₂CH₂-. In another embodiment, Z² may be -CH₂CH₂CH₂CH₂CH₂CH₂CH₂CH₂CH₂CH₂CH₂.

R³¹ is each independently -Z^{2'}-CR^{32'}_{q2}R^{33'}_{r2'}.

Z^{2'} is each independently a single bond, an oxygen atom, or a divalent organic group. Note that the structure denoted as Z^{2'} hereinafter is bonded to (CR^{32'}_{q2'}R^{33'}_{r2'}) on its right side.

In a preferred embodiment, Z^{2'} does not contain a siloxane bond.

Z^{2'} is preferably a C₁₋₃₀ alkylene group, -(CH₂)_{z5'}-O-(CH₂)_{z6'}- (wherein z5' is an integer of 0 to 30, such as an integer of 1 to 20, an integer of 0 to 6 or an integer of 1 to 6, and z6' is an integer of 0 to 30, such as an integer of 1 to 20, an integer of 0 to 6 or an integer of 1 to 6), or -(CH₂)_{z7'}-phenylene-(CH₂)_{z8'}- (wherein z7' is an integer of 0 to 30, such as an integer of 1 to 20, an integer of 0 to 6 or an integer of 1 to 6, and z8' is an integer of 0 to 30, such as an integer of 1 to 20, an integer of 0 to 6 or an integer of 1 to 6). Such a C₁₋₃₀ alkylene group may be linear or may be branched, and is preferably linear. These groups are optionally substituted with, for example, one or more substituents selected from a fluorine atom, a C₁₋₃₀ alkyl group, a C₂₋₃₀ alkenyl group, and a C₂₋₃₀ alkynyl group, and are preferably unsubstituted.

In a preferred embodiment, Z^{2'} is a C₁₋₆ alkylene group or -(CH₂)_{z7'}-phenylene-(CH₂)_{z8'}-, preferably -phenylene-(CH₂)_{z8'}-. When Z^{2'} is such a group, light resistance, in particular ultraviolet resistance, can be further enhanced.

In another preferred embodiment, Z^{2'} is a C₁₋₃ alkylene group. In one embodiment, Z^{2'} may be -CH₂CH₂CH₂-. In another embodiment, Z^{2'} may be -CH₂CH₂-. In another embodiment, Z^{2'} may be -CH₂CH₂CH₂CH₂CH₂CH₂CH₂CH₂CH₂CH₂CH₂.

R^{32'} is each independently -Z³-SiR³⁴ₙ₂R³⁵₃₋ₙ₂.

Z³ is each independently a single bond, an oxygen atom, or a divalent organic group. Note that the structure denoted as Z³ hereinafter is bonded to (SiR³⁴ₙ₂R³⁵₃₋ₙ₂) on its right side.

In one embodiment, Z³ is an oxygen atom.

In one embodiment, Z³ is a divalent organic group.

In a preferred embodiment, Z³ does not contain a siloxane bond.

Z³ is preferably a C₁₋₃₀ alkylene group, -(CH₂)_{z5"}-O-(CH₂)_{z6}- (wherein z5" is an integer of 0 to 30, such as an integer of 1 to 20, an integer of 0 to 6 or an integer of 1 to 6, and z6" is an integer of 0 to 30, such as an integer of 1 to 20, an integer of 0 to 6 or an integer of 1 to 6), or -(CH₂)_{z7"}-phenylene-(CH₂)_{z8"}- (wherein z7" is an integer of 0 to 30, such as an integer of 1 to 20, an integer of 0 to 6 or an integer of 1 to 6, and z8" is an integer of 0 to 30, such as an integer of 1 to 20, an integer of 0 to 6 or an integer of 1 to 6). Such a C₁₋₃₀ alkylene group may be linear or may be branched, and is preferably linear. These groups are optionally substituted with, for example, one or more substituents selected from a fluorine atom, a C₁₋₃₀ alkyl group, a C₂₋₃₀ alkenyl group, and a C₂₋₃₀ alkynyl group, and are preferably unsubstituted.

In a preferred embodiment, Z³ is a C₁₋₆ alkylene group or -(CH₂)_{z7"}-phenylene-(CH₂)_{z8"}-, preferably -phenylene-(CH₂)_{z8"}-. When Z³ is such a group, light resistance, in particular ultraviolet resistance, can be further enhanced.

In another preferred embodiment, Z³ is a C₁₋₃ alkylene group. In one embodiment, Z³ may be -CH₂CH₂CH₂-. In another embodiment, Z³ may be -CH₂CH₂-. In another embodiment, Z³ may be -CH₂CH₂CH₂CH₂CH₂CH₂CH₂CH₂CH₂CH₂CH₂.

R³⁴ is each independently a hydroxyl group or a hydrolyzable group.

R³⁴ is preferably, each independently, a hydrolyzable group.

R³⁵ is each independently a monovalent organic group. Such a monovalent organic group is a monovalent organic group excluding the above hydrolyzable group.

In R³⁵, the monovalent organic group is preferably a C₁₋₂₀ alkyl group, more preferably a C₁₋₆ alkyl group, and still more preferably a methyl group.

In the formulae, n2 is each independently an integer of 0 to 3 for each (SiR³⁴ₙ₂R³⁵₃₋ₙ₂) unit, However, in the end moiety of the formula (S4), at least two (SiR³⁴ₙ₂R³⁵₃₋ₙ₂) units with n2 of 1 to 3 are present. In other words, in each end moiety of the formula (S4), at least two Si atoms to which a hydroxyl group or a hydrolyzable group is bonded are present.

n2 is each independently an integer of preferably 1 to 3, more preferably 2 to 3, and still more preferably 3 for each (SiR³⁴ₙ₂R³⁵₃₋ₙ₂) unit.

R^{33'} is each independently a hydrogen atom, a hydroxyl group, or a monovalent organic group. Such a monovalent organic group is a monovalent organic group excluding the hydrolyzable group.

In R^{33'}, the monovalent organic group is preferably a C₁₋₂₀ alkyl group or - (CₛH₂ₛ)ₜ₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R^{33'} is a hydroxyl group.

In another embodiment, R^{33'} is a monovalent organic group, preferably a C₁₋₂₀ alkyl group, and more preferably a C₁₋₆ alkyl group.

q2' is each independently an integer of 0 to 3, and r2' is each independently an integer of 0 to 3. Note that the sum of q2' and r2' is 3 in the (CR^{32'}_{q2'}R^{33'}_{r2'}) unit.

q2' is each independently an integer of preferably 1 to 3, more preferably 2 to 3, and still more preferably 3 for each (CR^{32'}_{q2'}R^{33'}_{r2'}) unit.

R³² is each independently -Z³-SiR³⁴ₙ₂R³⁵₃₋ₙ₂. Such -Z³-SiR³⁴ₙ₂R³⁵₃₋ₙ₂ has the same definition as described for R^{32'}.

R³³ is each independently a hydrogen atom, a hydroxyl group, or a monovalent organic group. Such a monovalent organic group is a monovalent organic group excluding the above hydrolyzable group.

In R³³, the monovalent organic group is preferably a C₁₋₂₀ alkyl group or - (CₛH₂ₛ)ₜ₁-(O-CₛH₂ₛ)ₜ₂-H (wherein s is each independently an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R³³ is a hydroxyl group.

In another embodiment, R³³ is a monovalent organic group, preferably a C₁₋₂₀ alkyl group, and more preferably a C₁₋₆ alkyl group.

p2 is each independently an integer of 0 to 3, q2 is each independently an integer of 0 to 3, and r2 is each independently an integer of 0 to 3. Note that the sum of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferred embodiment, p2 is 3.

In one embodiment, q2 is each independently an integer of 1 to 3, preferably an integer of 2 to 3, and more preferably 3 for each (CR³¹ₚ₂R³²_{q2}R³³ᵣ₂) unit.

In one embodiment, p2 is 0, and q2 is each independently an integer of 1 to 3, preferably an integer of 2 to 3, and still more preferably 3 for each (CR³¹ₚ₂R³²_{q2}R³³ᵣ₂) unit.

R^{e1} is each independently -Z³-SiR³⁴ₙ₂R³⁵₃₋ₙ₂. Such -Z³-SiR³⁴ₙ₂R³⁵₃₋ₙ₂ has the same definition as described for R^{32'}.

R^{f1} is each independently a hydrogen atom, a hydroxyl group, or a monovalent organic group. Such a monovalent organic group is a monovalent organic group excluding the above hydrolyzable group.

In R^{f1}, the monovalent organic group is preferably a C₁₋₂₀ alkyl group or -(CₛH₂ₛ)ₜ₁-(O-CₛH₂ₛ)ₜ₂-H (wherein s is each independently an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R^{f1} is a hydroxyl group.

In another embodiment, R^{f1} is a monovalent organic group, preferably a C₁₋₂₀ alkyl group, and more preferably a C₁₋₆ alkyl group.

k2 is each independently an integer of 0 to 3, 12 is each independently an integer of 0 to 3, and m2 is each independently an integer of 0 to 3. The sum of k2, l2, and m2 is 3 in the (CR^{d1}ₖ₂R^{e1}ₗ₂R^{f1}ₘ₂) unit.

In one embodiment, 2 or more, such as 2 to 27, preferably 2 to 9, more preferably 2 to 6, still more preferably 2 to 3, and particularly preferably 3 (SiR³⁴ₙ₂R³⁵₃₋ₙ₂) units with n2 of 1 to 3, preferably 2 or 3, and more preferably 3 are present in each end moiety of the formula (S4).

In a preferred embodiment, when R^{32'} is present in the formula (S4), n2 is an integer of 1 to 3, preferably 2 or 3, and more preferably 3 in at least one, preferably all of R^{32'} groups.

In a preferred embodiment, when R³² is present in the formula (S4), n2 is an integer of 1 to 3, preferably 2 or 3, and more preferably 3 in at least one, preferably all of R³² groups.

In a preferred embodiment, when R^{e1} is present in the formula (S4), n2 is an integer of 1 to 3, preferably 2 or 3, and more preferably 3 in at least one, preferably all of R^{a1} groups.

In a preferred embodiment, in the formula (S4), k2 is 0, 12 is 2 or 3, preferably 3, and n2 is 2 or 3, preferably 3.

R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or - Z⁴-CR^{d1}ₖ₂R^{e1}ₗ₂R^{f1}ₘ₂. Here, R¹¹, R¹², R^{a1}, R^{b2}, R^{c1}, R^{d1}, R^{e1}, R^{f1}, n1, k1, 11, m1, k2, 12, and m2 have the same definitions as those described above.

In a preferred embodiment, R^{g1} and R^{h1} are each independently -Z⁴-SiR¹¹ₙ₁R¹²₃₋ₙ₁.

Z⁴ is each independently a single bond, an oxygen atom, or a divalent organic group. Note that the structure denoted as Z⁴ hereinafter is bonded to (SiR¹¹ₙ₁R¹²₃₋ₙ₁) on its right side.

In one embodiment, Z⁴ is an oxygen atom.

In one embodiment, Z⁴ is a divalent organic group.

In a preferred embodiment, Z⁴ does not contain a siloxane bond.

Z⁴ is preferably a C₁₋₃₀ alkylene group, -(CH₂)_{z5"}-O-(CH₂)_{z6}- (wherein z5" is an integer of 0 to 30, such as an integer of 1 to 20, an integer of 0 to 6 or an integer of 1 to 6, and z6" is an integer of 0 to 30, such as an integer of 1 to 20, an integer of 0 to 6 or an integer of 1 to 6), or -(CH₂)_{z7"}-phenylene-(CH₂)_{z8"}- (wherein z7" is an integer of 0 to 30, such as an integer of 1 to 20, an integer of 0 to 6 or an integer of 1 to 6, and z8" is an integer of 0 to 30, such as an integer of 1 to 20, an integer of 0 to 6 or an integer of 1 to 6). Such a C₁₋₃₀ alkylene group may be linear or may be branched, and is preferably linear. These groups are optionally substituted with, for example, one or more substituents selected from a fluorine atom, a C₁₋₃₀ alkyl group, a C₂₋₃₀ alkenyl group, and a C₂₋₃₀ alkynyl group, and are preferably unsubstituted.

In a preferred embodiment, Z⁴ is a C₁₋₆ alkylene group or -(CH₂)_{z7"}-phenylene-(CH₂)_{z8"}-, and preferably -phenylene-(CH₂)_{z8"}-. When Z⁴ is such a group, light resistance, in particular ultraviolet resistance, can be further enhanced.

In another preferred embodiment, Z⁴ is a C₁₋₃ alkylene group. In one embodiment, Z⁴ may be -CH₂CH₂CH₂-. In another embodiment, Z⁴ may be -CH₂CH₂-. In another embodiment, Z⁴ may be -CH₂CH₂CH₂CH₂CH₂CH₂CH₂CH₂CH₂CH₂CH₂.

In a preferred embodiment, the formulae (S1), (S2), (S3), (S4) , and (S5) do not contain a siloxane bond.

In one embodiment, R^{Si} is a group represented by the formula (S3), (S4), or (S5).

In one embodiment, R^{Si} is a group represented by the formula (S3) or (S4).

In one embodiment, R^{Si} is a group represented by the formula (S4), or the formula (S5).

In one embodiment, R^{Si} is a group represented by the formula (S1). In a preferred embodiment, the formula (S1) is a group represented by the formula (S 1-b). In a preferred embodiment, in the formula, R¹³ is a hydrogen atom, X¹¹ is a single bond or -R²⁸-Oₓ-R²⁹-(wherein R²⁸ and R²⁹ are each independently a single bond or a C₁₋₂₀ alkylene group, and x is 0 or 1), and n1 is 1 to 3, preferably 2 to 3, and still more preferably 3.

In one embodiment, R^{Si} is a group represented by the formula (S2). In a preferred embodiment, the formula (S2) is -SiR¹¹₂R¹², or -SiR¹¹₃.

In one embodiment, R^{Si} is a group represented by the formula (S3). In a preferred embodiment, the formula (S3) is -SiR^{a1}₂R^{c1} or -SiR^{a1}₃, R^{a1} is -Z¹-SiR²²_{q1}R²³ᵣ₁, Z¹ is a C₁₋₆ alkylene group, -(CH₂)_{z1}-O-(CH₂)_{z2}- (wherein z1 is an integer of 0 to 6, such as an integer of 1 to 6, and z2 is an integer of 0 to 6, such as an integer of 1 to 6), or -(CH₂)_{z3}-phenylene-(CH₂)_{z4}- (wherein z3 is an integer of 0 to 6, such as an integer of 1 to 6, and z4 is an integer of 0 to 6, such as an integer of 1 to 6), preferably a C₁₋₆ alkylene group, and q1 is 1 to 3, preferably 2 to 3, and still more preferably 3.

In one embodiment, R^{Si} is a group represented by the formula (S4). In a preferred embodiment, the formula (S4) is -CR^{e1}₂R^{f1} or -CR^{e1}₃, R^{e1} is -Z³-SiR³⁴ₙ₂R³⁵₃₋ₙ₂, Z³ is a C₁₋₆ alkylene group, -(CH₂)_{z5"}-O-(CH₂)_{z6"}- (wherein z5" is an integer of 0 to 6, such as an integer of 1 to 6, and z6" is an integer of 0 to 6, such as an integer of 1 to 6), or -(CH₂)_{z7"}-phenylene-(CH₂)_{z8"}- (wherein z7" is an integer of 0 to 6, such as an integer of 1 to 6, and z8" is an integer of 0 to 6, such as an integer of 1 to 6), preferably a C₁₋₆ alkylene group, and n2 is 1 to 3, preferably 2 to 3, and still more preferably 3.

In one embodiment, R^{Si} is a group represented by the formula (S5). In a preferred embodiment, R^{g1} and R^{h1} are -Z⁴-SiR¹¹ₙ₁R¹²₃₋ₙ₁, Z⁴ is a C₁₋₆ alkylene group, -(CH₂)_{z5"}-O-(CH₂)_{z6"}- (wherein z5" is an integer of 0 to 6, such as an integer of 1 to 6, and z6" is an integer of 0 to 6, such as an integer of 1 to 6), or -(CH₂)_{z7"}-phenylene-(CH₂)_{z8"}- (wherein z7" is an integer of 0 to 6, such as an integer of 1 to 6, and z8" is an integer of 0 to 6, such as an integer of 1 to 6), preferably a C₁₋₆ alkylene group, and n1 is 1 to 3, preferably 2 to 3, and still more preferably 3.

The fluorine containing silane compound represented by the above formula (1) is not limited, and it may have a number average molecular weight of 1 × 10² to 1 × 10⁵. It is preferable that the fluorine containing silane compound represented by the above formula (1) has a number average molecular weight of preferably 100 to 30,000, and more preferably 100 to 10,000, from the viewpoint of friction durability. Note that such a "number average molecular weight" is defined as a value obtained by ¹H-NMR measurement.

Examples of the fluorine containing silane compound represented by the formula (1) include those with the following structures.

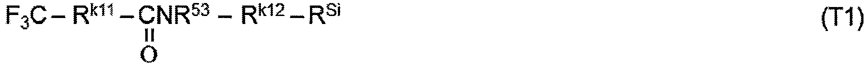

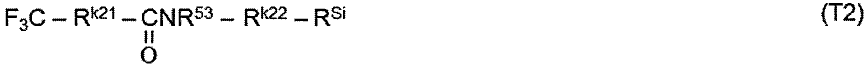

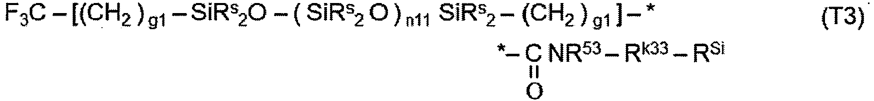

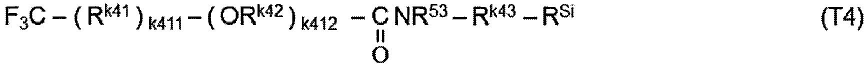

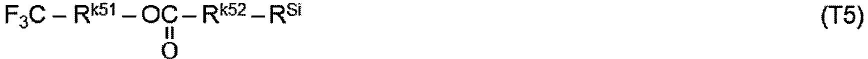

F₃C-R^{k61}-R^{Si} (T6)

F₃C-R^{k71}-O-R^{k72}-R^{Si} (T7)

R⁵³ is a hydrogen atom or a monovalent organic group. Examples thereof include a hydrogen atom and a methyl group.

R^{Si} is the same as defined above.

In the formula (T1), F₃C-R^{k11}- and -C(=O)NR⁵³-R^{k12}- correspond to Rf¹ and X^{A}, respectively.

R^{k11} is a single bond, or a C₁₋₃₀ alkylene group (such as a C₁₋₉ alkylene group), and is, for example, a single bond.

R^{k12} is a single bond, or a C₁₋₃₀ alkylene group, and is, for example, a C₁₋₁₀ alkylene group.

In the formula (T2), F₃C-R^{k21}- and -C(=O)NR⁵³-R^{k22}- correspond to Rf¹ and X^{A}, respectively.

R^{k21} is a single bond, or a C₁₀₋₂₀₀ alkylene group, and is, for example, a C₁₀₋₃₀ alkylene group.

R^{k22} is a single bond, or a C₁₋₂₀₀ alkylene group, and is, for example, a C₁₋₁₀ alkylene group.

In the formula (T3), F₃C-[(CH₂)_{g1}-SiR^{s}₂O-(SiR^{s}₂O)ₙ₁₁-SiR^{s}₂]-(CH₂)_{g1}- and - C(=O)NR⁵³-R^{k33}- correspond to Rf¹ and X^{A}, respectively.

g1 is each independently an integer of 0 to 30.

R^{k33} is a single bond, or a C₁₋₂₀₀ alkylene group, and is, for example, a C₁₋₁₀ alkylene group.

However, the sum of the number of carbon atoms and g1 is 0 to 200.

R^{s} and n11 are the same as defined above.

In the formula (T4), F₃C-(R^{k41})ₖ₄₁₁-(OR^{k42})ₖ₄₁₂- and -C(=O)NR⁵³-R^{k43}- correspond to Rf¹ and X^{A}, respectively.

R^{k41} and R^{k42} are each a single bond or an alkylene group.

k411 is 0 or 1.

k412 is an integer of 0 to 150.

However, the number of carbon atoms contained in -(R^{k41})ₖ₄₁₁-(OR^{k42})ₖ₄₁₂- is an integer of 1 to 150.

R^{k43} is a single bond, or a C₁₋₃₀ alkylene group (such as a C₁₋₂₀ alkylene group), and is, for example, a C₁₋₁₀ alkylene group.

R^{k41} is a single bond, or a C₁₋₃₀ alkylene group (such as a C₁₋₂₀ alkylene group), and is, for example, a methylene group or an ethylene group, k411 is 1, R^{k42} is a C₁₋₆ alkylene group, and is, for example, an ethylene group, and k412 is an integer of 1 to 50.

In the formula (T5), F₃C-R^{k51}- and -OC(=O)NR⁵³-R^{k52}- correspond to Rf¹ and X^{A}, respectively.

R^{k51} is a single bond, or a C₁₋₂₀₀ alkylene group, and is, for example, a single bond, or a C₁₋₃₀ alkylene group.

R^{k52} is a single bond, or a C₁₋₂₀₀ alkylene group, and is, for example, a C₁₀₋₃₀ alkylene group.

In the formula (T6), F₃C-R^{k61}- corresponds to Rf¹.

R^{k61} is a C₁₋₂₀₀ alkylene group, and is, for example, a C₁₋₃₀ alkylene group.

In the formula (T7), F₃C-R^{k71}-O-R^{k72}- corresponds to Rf¹.

R^{k71} and R^{k72} are each independently a single bond or a C₁₋₂₀₀ alkylene group. However, the total number of carbon atoms in R^{k71} and R^{k72} is an integer of 0 to 200. For example, R^{k71} and R^{k72} are each independently a single bond or a C₁₋₃₀ alkylene group.

The fluorine containing silane compound represented by the formula (1) is preferably a fluorine containing silane compound in which
Rf¹ is R^{A1}-X^{B}-,
R^{A1} is CF₃- or CF₃O-,
X^{B} is a single bond,
X^{A} is -(p-phenylene)ᵥ₁-(CH₂)ᵥ₂-R⁵⁷ᵥ₃-(CH₂)ᵥ₄-,
R⁵⁷ is -CONH-, -NHCO-, -COO-, or -O-,
v1 is 0 or 1,
v2 is an integer of 0 to 20,
v3 is 0 or 1,
v4 is an integer of 2 to 20,
R^{Si} is -SiR¹¹₃,
R¹¹ is a methoxy group,
α1 is 1, and
α2 is 1.

Specific examples of the fluorine containing silane compound represented by the formula (1) include those with the following structures.

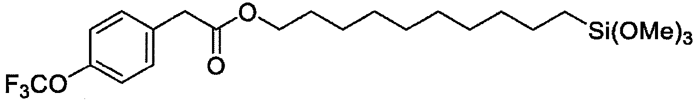

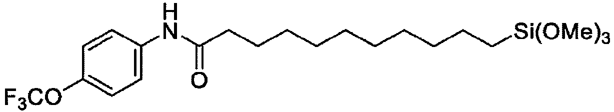

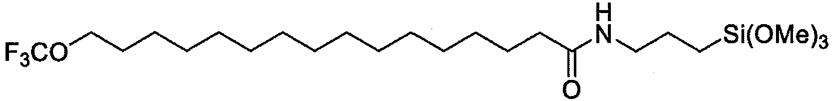

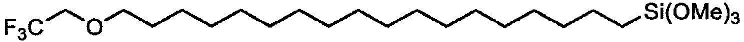

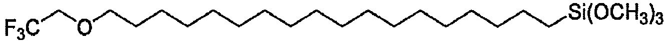

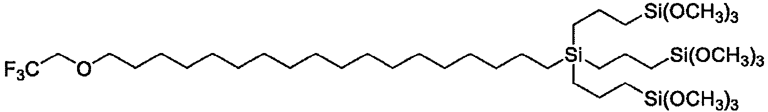

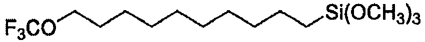

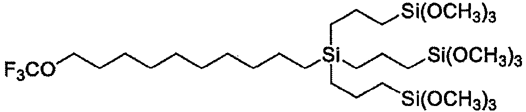

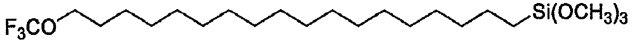

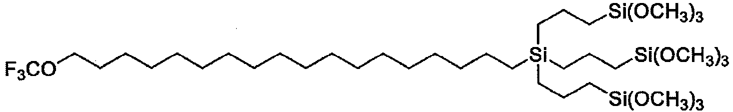

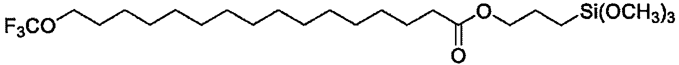

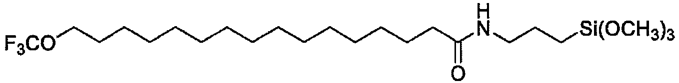

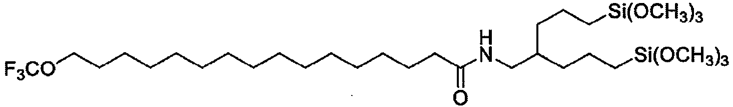

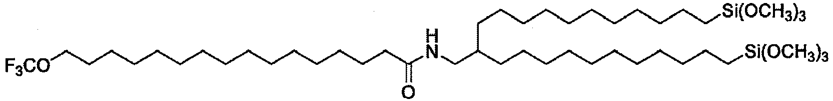

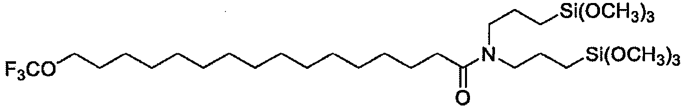

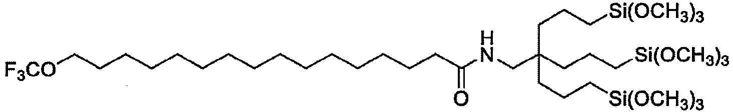

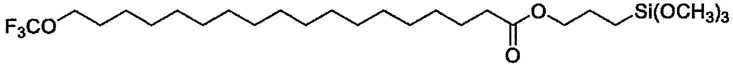

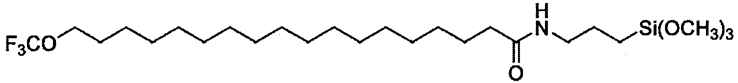

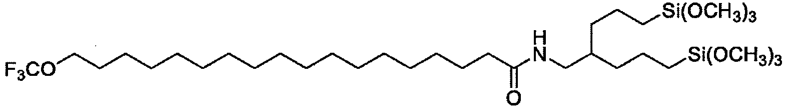

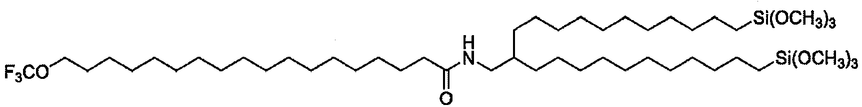

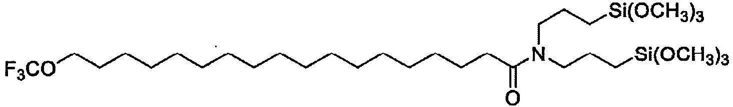

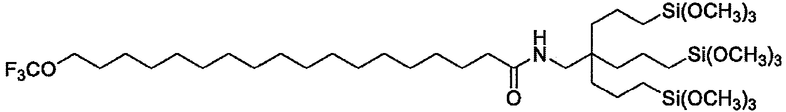

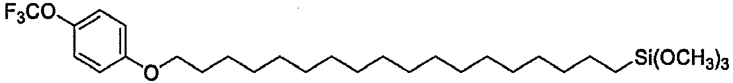

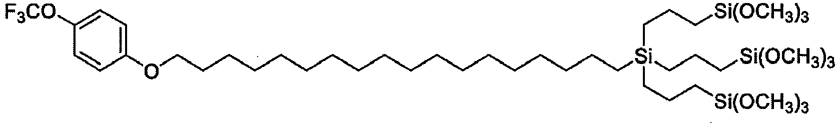

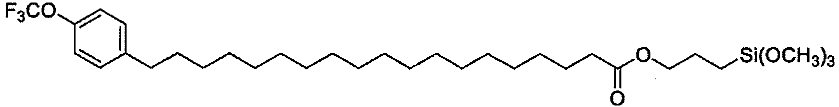

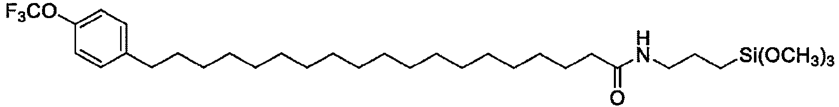

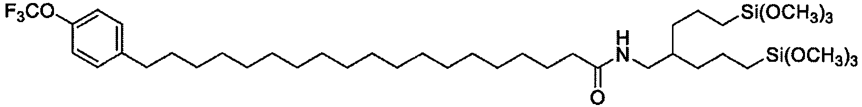

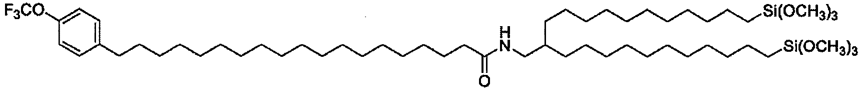

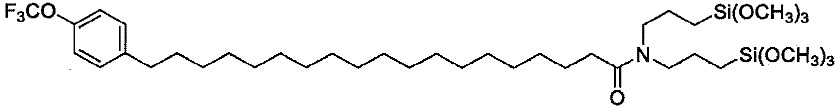

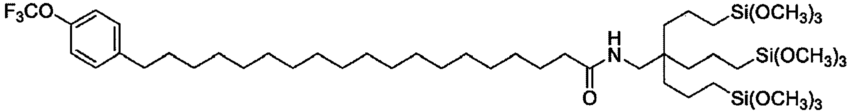

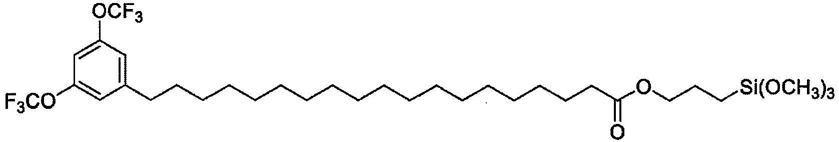

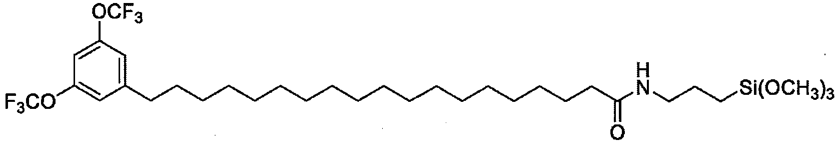

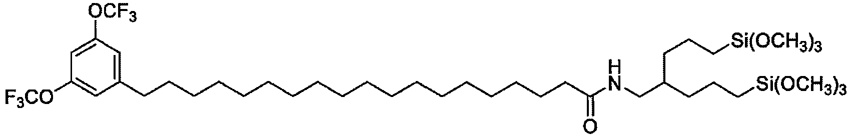

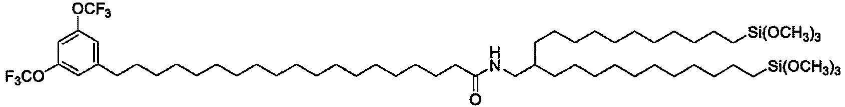

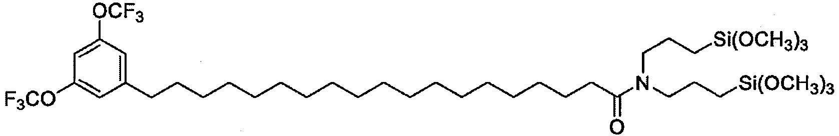

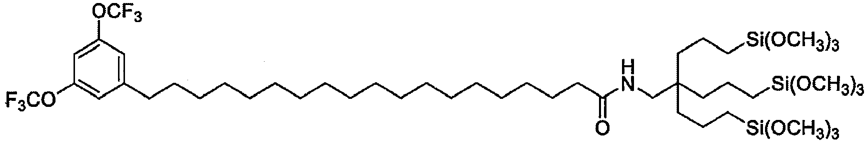

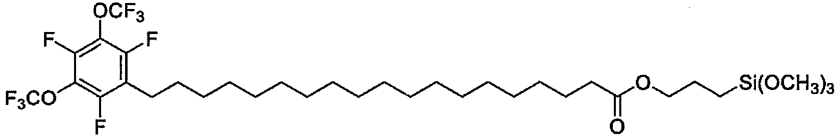

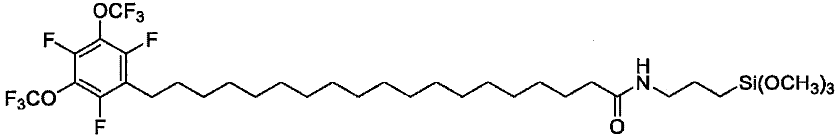

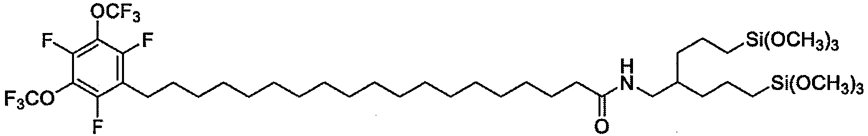

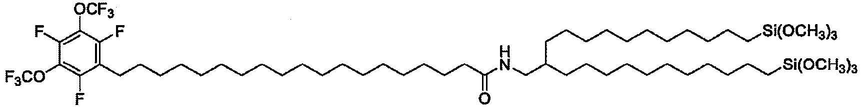

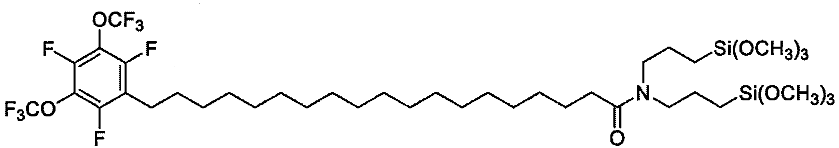

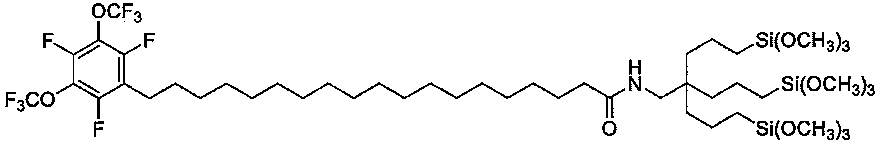

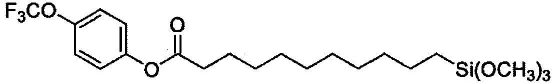

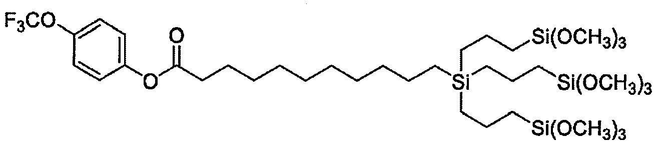

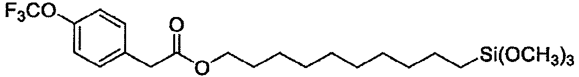

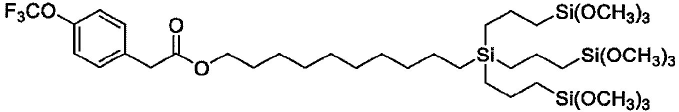

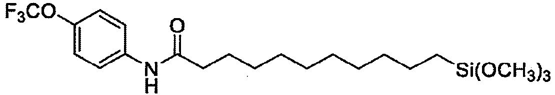

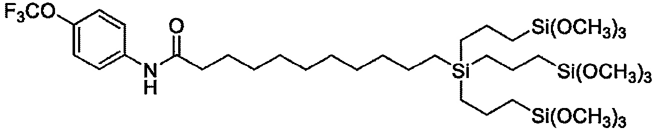

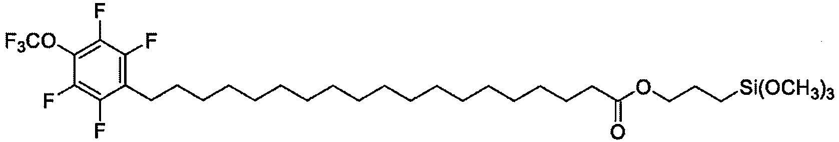

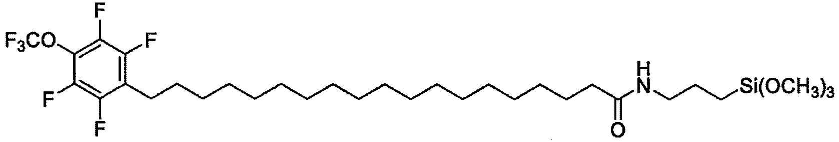

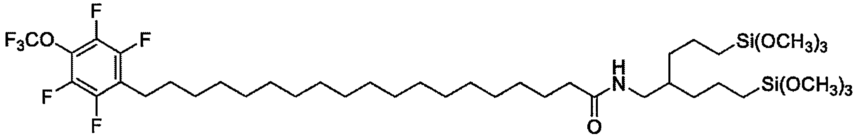

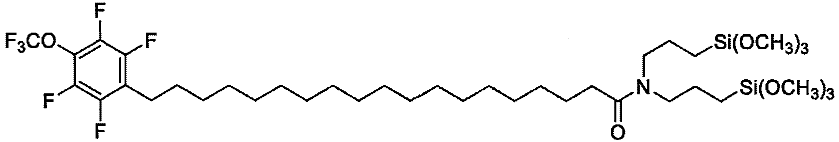

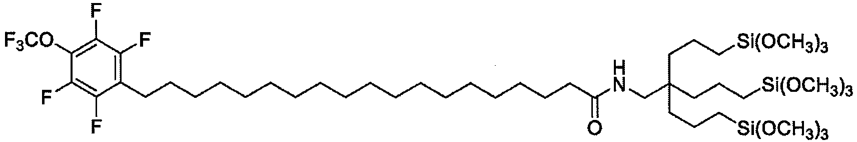

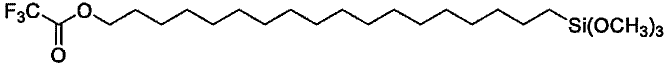

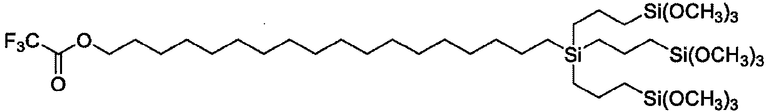

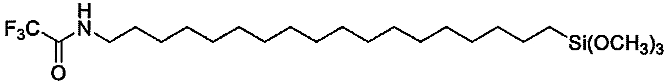

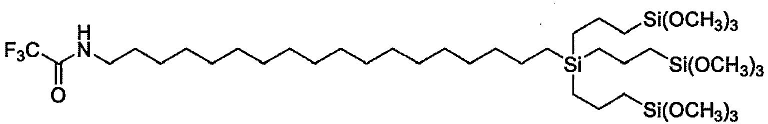

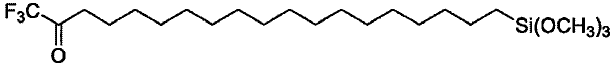

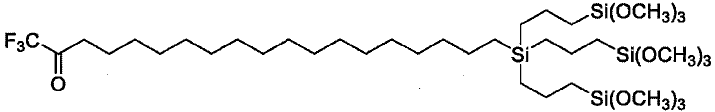

### [Producing Method]

Hereinafter, a method for producing the fluorine containing silane compound of the present disclosure will be described. Note that the method for producing the fluorine containing silane compound of the present disclosure is not limited to the method below.

As a method for producing a group containing F₃C- (trifluoromethyl group), there are two methods: one is to derive it from a compound having F₃C-, and the other is to fluorinate a functional group and introduce it.

### (Production Method 1)

The present production method includes the following step. Step (I): A compound (11): F₃C-R^{j111}-NH₂ is used as a raw material and mixed with an isocyanate compound (12): O=C=N-R^{j112}-R^{Si} to produce a fluorine containing silane compound (13).

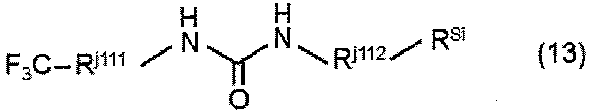

R^{j111} is a single bond, an alkylene group, or an alkylene group containing an ether bond. R^{j111} is, for example, a single bond, or a C₁₋₃₀ alkylene group, and specifically a methylene group, an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, an octadecylene group, a nonadecylene group, an eicosadecylene group, or any of the foregoing groups with an O atom at a left end.

Specific examples of the compound (11) include 2,2,2-trifluoroethylamine, and 3,3,3-trifluoropropylamine.

R^{j112} is a single bond or an alkylene group, and is, for example, an alkylene group, and specifically a C₁₋₃₀ alkylene group.

Specific examples of the isocyanate compound (12) may include 3-(trimethoxysilyl)propyl isocyanate.

R^{Si} is the same as defined above. For example, R^{Si} is represented by (S2).

The above reaction may be performed in a solvent. The solvent is preferably one that can dissolve the compound (11) to the compound (13). The solvent may be used alone as one type, or may be used in combination of two or more types.

The solvent is, for example, a non-fluorinated solvent or a fluorinated solvent.

Examples of the non-fluorinated solvent may include a S atom containing solvent, an amide solvent, an ester solvent, a ketone solvent, an ether solvent, a halogen containing solvent, and a hydrocarbon solvent.

Examples of the S atom containing solvent may include dimethyl sulfoxide, sulfolane, dimethyl sulfide, and carbon disulfide.

Examples of the amide solvent may include N-methylpyrrolidone, N,N-dimethylformamide, dimethylacetamide, and hexamethylphosphoric triamide.

Examples of the ester solvent may include methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate.

Examples of the ketone solvent may include acetone, methyl ethyl ketone, methyl isobutyl ketone, 2-hexanone, cyclohexanone, methyl amino ketone, and 2-heptanone.

Examples of the ether solvent may include diethyl ether, tetrahydrofuran, cyclopentyl methyl ether, ethylene glycol, monoglyme, and diglyme.

Examples of the halogen containing solvent may include dichloromethane and chloroform.

Examples of the hydrocarbon solvent may include pentane, hexane, heptane, benzene, and toluene.

The fluorinated solvent is a solvent containing one or more fluorine atoms. Examples of the fluorinated solvent may include a compound in which at least one of the hydrogen atoms of a hydrocarbon is replaced by a fluorine atom, such as a hydrofluorocarbon, a hydrochlorofluorocarbon, and a perfluorocarbon; and a hydrofluoroether. Here, the term "hydrocarbon" refers to a compound that contains only carbon and hydrogen atoms.

Examples of the hydrofluorocarbon may include bis(trifluoromethyl)benzene, specifically 1,3-bis(trifluoromethyl)benzene (m-XHF), 1,1,1,2,2,3,3,4,4,5,5,6,6-tridecafluorooctane, C₆F₁₃CH₂CH₃ (for example, Asahiklin (R) AC-6000 manufactured by AGC Inc.), and 1,1,2,2,3,3,4-heptafluorocyclopentane (for example, Zeorora (R) H manufactured by ZEON Corporation).

Examples of the hydrochlorofluorocarbon may include HCFC-225 (for example, Asahiklin AK-225 manufactured by AGC Inc.) and HFO-1233zd(Z) (for example, Celefin 1233Z manufactured by Central Glass Co., Ltd.).

Examples of the perfluorocarbon may include perfluorohexane, perfluoromethylcyclohexane, perfluoro-1,3-dimethylcyclohexane, and perfluorobenzene.

Examples of the hydrofluoroether may include an alkyl perfluoroalkyl ether (the perfluoroalkyl group and the alkyl group may be linear or branched) such as perfluoropropyl methyl ether (C₃F₇OCH₃) (for example, Novec (R) 7000 manufactured by Sumitomo 3M Limited), perfluorobutyl methyl ether (C₄F₉OCH₃) (for example, Novec (R) 7100 manufactured by Sumitomo 3M Limited), perfluorobutyl ethyl ether (C₄F₉OC₂H₅) (for example, Novec (R) 7200 manufactured by Sumitomo 3M Limited), and perfluorohexyl methyl ether (C₂F₅CF(OCH₃)C₃F₇) (for example, Novec (R) 7300 manufactured by Sumitomo 3M Limited); and CF₃CH₂OCF₂CHF₂ (for example, Asahiklin (R) AE-3000 manufactured by AGC Inc.).

Among the fluorinated solvents listed above, m-XHF, HFE7100, HFE7200, HFE7300, AC-6000, perfluorohexane, and perfluorobenzene are preferred.

The solvent is preferably at least one selected from the group consisting of diethyl ether, tetrahydrofuran, cyclopentyl methyl ether, ethylene glycol, dichloromethane, chloroform, benzene, toluene, and 1,3-bis(trifluoromethyl)benzene, and is more preferably at least one selected from the group consisting of dichloromethane, chloroform, toluene, and 1,3-bis(trifluoromethyl)benzene.

The reaction temperature is not limited. For example, the reaction temperature may be 0 to 100°C, 0 to 50°C, or 0 to 30°C.

### (Production Method 2)

In the present production method, Rf and a carbonyl group (-C(=O)-) containing compound having CF₃ at an end are allowed to react with an olefin (-CH=CH₂) containing amine compound, thereby producing an olefin containing amide compound, from which the fluorine containing silane compound of the present disclosure can be synthesized. For example, an amide compound containing an olefin at an end is allowed to react with a compound represented by the following formula:

HSiR^{j27}ₘ₃R^{j28}₃₋ₘ₃

wherein
R^{j27} is each independently a hydroxyl group or a hydrolyzable group;
R^{j28} is each independently a monovalent organic group; and
m3 is 1 to 3,
thereby obtaining the fluorine containing silane compound. The monovalent organic group does not contain a hydrolyzable group.

The olefin containing amine compound is a compound having H₂N- and - CH=CH₂, and is, for example, H₂N(CH₂)ₓ₃₁Q((CH₂)ₓ₃₂CH=CH₂)ₓ₃₃R^{x3}ₓ₃₄ (wherein x31 is an integer of 0 to 30, x32 is an integer of 0 to 6, x33 is an integer of 1 or more, x34 is an integer of 0 or more, the sum of x33 and x34 is the valence of Q - 1, Q is N, Si, or C, and R^{x3} is a hydrogen atom, a hydroxyl group, or a monovalent organic group).

Examples of the olefin containing amine compound include allylamine, diallylamine, 2-allylpent-4-en-1-amine (H₂NCH₂CH(CH₂CH=CH₂)₂), 2,2-diallylpent-4-en-1-amine (H₂N-CH₂C(CH₂CH=CH₂)₃), 3-buten-1-amine, 4-penten-1-amine, 5-hexen-1-amine, 6-hepten-1-amine, 7-octen-1-amine, 8-nonen-1-amine, 9-decen-1-amine, 10-undecen-1-amine, 11-dodecen-1-amine, 12-tridecen-1-amine, 13-tetradecen-1-amine, 14-pentadecen-1-amine, 15-hexadecen-1-amine, 16-heptadecen-1-amine, 17-octadecen-1-amine, 18-nonadecen-1-amine, 19-icosen-1-amine, 20-henicosen-1-amine, 23-tetracosen-1-amine, and 29-triaconten-1-amine.

The carbonyl group containing compound is a compound containing F₃C- and a C(=O) group. Examples of the carbonyl group containing compound may include the compounds obtained by the synthesis methods described below, or a compound represented by the following formula (21).

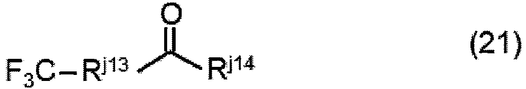

In the formula (21), R^{j13} is a single bond, an alkylene group, or an alkylene group containing an ether bond, and is, for example, a single bond; and R^{j14} is a hydroxyl group, a fluorine atom, a chlorine atom, or a -O-lower alkyl group (that is, an alkoxide group), and is, for example, a hydrogen atom, a methoxide group, or an ethoxide group, and specifically, a hydrogen atom or a methoxide group.

Specific examples of the compound of the formula (21) may include compounds having a carboxyl group at an end, such as trifluoroacetic acid, 3,3,3-trifluoropropionic acid, 4,4,4-trifluorobutyric acid, 5,5,5-trifluorovaleric acid, 6,6,6-trifluorocaproic acid, 7,7,7-trifluoroheptanoic acid, 8,8,8-trifluorooctanoic acid, 9,9,9-trifluorononanoic acid, 10,10,10-trifluorodecanoic acid, 12,12,12-trifluorolauric acid, 14,14,14-trifluoromyristic acid, 16,16,16-trifluoro-palmitic acid, 17,17,17-trifluoro- margaric acid, and 18,18,18-trifluorostearic acid, corresponding methyl esters, corresponding ethyl esters, and acid chlorides.

When the carbonyl group containing compound has acid chloride (C(=O)Cl), the olefin containing amide compound can be obtained by allowing it to react with the olefin containing amine compound in the presence of a trialkylamine. Examples of the trialkylamine may include triethylamine.

When the carbonyl group containing compound has a carboxylic acid, the olefin containing amide compound can be obtained by allowing it to react with a condensing agent.

As the condensing agent, it is preferable to use 1-(3-dimethylaminopropyl)-3-ethylcarbodiimide (EDC), 1-(3-dimethylaminopropyl)-3-ethylcarbodiimide hydrochloride (EDC-HCl), N,N'-dicyclohexylcarbodiimide (DCC), 1-[bis(dimethylamino)methylene]-1H-1,2,3-triazolo[4,5-b]pyridinium 3-oxide hexafluorophosphate (HATU), 1-[bis(dimethylamino)methylene]-1H-benzotriazolium 3-oxide hexafluorophosphate (HBTU), 1-[bis(dimethylamino)methylene]-1H-1,2,3-triazolo[4,5-b]pyridinium 3-oxide tetrafluoroborate (TATU), 1-[bis(dimethylamino)methylene]-1H-benzotriazolium 3-oxide tetrafluoroborate (TBTU), (1-cyano-2-ethoxy-2-oxoethylideneaminooxy)dimethylaminomorpholinocarbenium hexafluorophosphate (COMU), O-[(ethoxycarbonyl)cyanomethyleneamino]-N,N,N',N'-tetramethyluronium hexafluorophosphate (HOTU), 1H-benzotriazol-1-yloxytripyrrolidinophosphonium hexafluorophosphate (PyBOP), 1H-benzotriazol-1-yloxytris(dimethylamino)phosphonium hexafluorophosphate (BOP), bromotripyrrolidinophosphonium hexafluorophosphate (PyBroP), diphenylphosphoryl azide (DPPA), 4-(4,6-dimethoxy-1,3,5-triazin-2-yl)-4-methylmorpholinium chloride (DMT-MM), 1-hydroxybenzotriazole (HOBt), or 1-hydroxy-7-azabenzotriazole (HOAt), and it is preferable to use 1-(3-dimethylaminopropyl)-3-ethylcarbodiimide hydrochloride, N,N'-dicyclohexylcarbodiimide, or 1-hydroxybenzotriazole. Furthermore, 4-dimethylaminopyridine (DMAP) or the like may be added as a catalyst.

When the carbonyl group containing compound has an ester, the olefin containing amide compound can be obtained by allowing it to react in the presence of a base.

As the base, it is preferable to use 1,5,7-triazabicyclo[4.4.0]dec-5-ene (TBD), 1,2,4-triazole, 1,8-diazabicyclo[5.4.0]-7-undecene (DBU), sodium methoxide, or sodium tert-butoxide, and it is more preferable to use 1,5,7-triazabicyclo[4.4.0]dec-5-ene.

The reaction temperature is not limited. For example, the reaction temperature may be 0 to 150°C, 0 to 100°C, or 0 to 50°C.

The solvent to be used can be the same as in Production Method 1. The solvent is preferably acetonitrile, dichloromethane, chloroform, toluene, diethyl ether, or tetrahydrofuran. The reaction may also be carried out with no solvent.

### (Production Method 3)

In the present production method, an olefin group containing compound is used as a raw material to produce a fluorine containing silane compound.

The olefin group containing compound is a compound having F₃C- and an olefin group (-CH=CH₂). Examples of the olefin group containing compound may include compounds obtained by synthetic methods described below.

Examples of the olefin group containing compound include 3,3,3-trifluoropropene, 4,4,4-trifluoro-1-butene, 5,5,5-trifluoro-1-pentene, 6,6,6-trifluoro-1-hexene, 7,7,7-trifluoro-1-pentene, 8,8,8-trifluoro-1-octene, 9,9,9-trifluoro-1-nonene, 10,10,10-trifluoro-1-decene, 11,11,11-trifluoro-1-undecene, 12,12,12-trifluoro-1-dodecene, 13,13,13-trifluoro-1-tridecene, 14,14,14-trifluoro-1-tetradecene, 15,15,15-trifluoro-1-pentadecene, 16,16,16-trifluoro-1-hexadecene, 17,17,17-trifluoro-1-heptadecene, 18,18,18-trifluoro-1-octadecene, 19,19,19-trifluoro-1-nonadecene, 20,20,20-trifluoro-1-icosene, 21,21,21-trifluoro-1-henicosene, 24,24,24-trifluoro-1-tetracosene, and 30,30,30-trifluoeo-1-triacontene.

For example, by a method including: allowing an olefin group to react with HSiM₃ (M is each independently a halogen atom or a C₁₋₆ alkoxy group) and further allowing the resulting compound to react with
a compound represented by the formula: Hal-J-CH=CH₂ (wherein J represents Mg, Cu, Pd, or Zn, and Hal represents a halogen atom), and
if desired,
a compound represented by the formula: R^{c}_{h'}L (wherein R^{c} is the same as defined above,
L represents a group that can be bonded to R^{c}, and h' is an integer of 1 to 3),
thereby obtaining the following compound:

   F₃C-R^{j21}-CH₂CH₂- SiR^{c'}ₘ(CH=CH₂)_{k'}
(-R^{j21}-CH₂CH₂- corresponds to X^{B}. For example, -R^{j21}-CH₂CH₂- is an alkylene group, or an alkylene group containing an ether bond, such as a C₁₋₃₀ alkylene group, or a C₁₋₃₀ alkylene group containing an ether bond, and specifically a C₁₀₋₂₅ alkylene group, or a C₁₀₋₂₅ alkylene group containing an ether bond;
   allowing the above compound to react with HSiM₃ (wherein M is each independently a halogen atom or a C₁₋₆ alkoxy group), and if desired,
   a compound represented by the formula: R²³_{i'}L' (wherein R²³ is the same as defined above, L' represents a group that can be bonded to R²³, and i' is an integer of 1 to 3),
and if desired,
a compound represented by the formula: R²⁴_{j'}L" (wherein R²⁴ is the same as defined above,
L" represents a group that can be bonded to R²⁴, and j' is an integer of 1 to 3),
the following formula:

   F₃C-R^{j22}-R^{Si}
(R^{j22} is a divalent organic group, and corresponds to -R^{j21}-CH₂CH₂-. R^{Si} is the same as defined above)
can be produced. Note that the above description can be applied to other olefin group containing compounds as well.

### (Production Method 4)

In the present production method, a carbonyl group containing compound is allowed to react with an amine containing silane compound, thereby producing a fluorine containing silane compound.

The carbonyl group containing compound is a compound containing F₃C- and C(=O). Examples of the carbonyl group containing compound may include the compounds obtained by the synthesis methods described below, or a compound represented by the following formula (21). 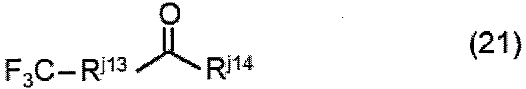 R^{j13} and R^{j14} are the same as defined above.

The amine containing silane compound is a compound having a H₂N- group and a R^{Si} group. Examples of the amine containing silane compound may include H₂N-R^{j23}-R^{Si}, and specific examples thereof may include aminopropyltrimethoxysilane. R^{j23} is an alkylene group, such as a C₁₋₄ alkylene group, specifically a methylene group, an ethylene group, or a propylene group; and R^{Si} is the same as defined above, and for example, R^{Si} is represented by the formula (S2).

The fluorine containing silane compound is, for example, F₃C-R^{j24}-C(=O)NHR^{j23}-R^{Si}. F₃C-R^{j24}- corresponds to Rf¹. R^{j24}- is an alkylene group, such as a C₁₋₄ alkylene group, and specifically, a methylene group, an ethylene group, a propylene group, or any of the foregoing groups with an O atom at a left end.

The reaction temperature is preferably 0°C to 150°C, and more preferably 20°C to 100°C.

The solvent to be used can be the same as in Production Method 1, and preferably, toluene, dichloromethane, chloroform, methanol, or ethanol can be used.

### (Production Method 5)

In the present production method, an olefin group containing compound is allowed to react, thereby producing a fluorine containing silane compound.

Specifically, the olefin group containing compound is allowed to react with a compound represented by the following formula:

HSiR^{j25}ₘ₃R^{j26}₃₋ₘ₃

wherein
R^{j25} is each independently a hydroxyl group or a hydrolyzable group;
R^{j26} is each independently a monovalent organic group; and
m3 is 1 to 3,
thereby obtaining the fluorine containing silane compound. Note that the above description can be applied to other olefin group containing compounds as well.

The olefin group containing compound is a compound having F₃C- and an olefin group. Examples of the olefin group containing compound may include the compounds obtained by the synthesis methods described below.

The reaction temperature is preferably -20°C to 150°C, and more preferably 0°C to 100°C.

The solvent to be used can be the same as in Production Method 1, and preferably, toluene, dichloromethane, chloroform, methanol, ethanol, diethyl ether, or cyclopentyl methyl ether can be used.

### (Synthesis Method 1)

In the present method, a compound (31) having a group containing F₃C- and a hydroxyl group: F₃C-R^{j33}-OH is used as a raw material to synthesize a carbonyl group containing compound.

R^{j33} is an alkylene group, or an alkylene group containing an ether bond, and is, for example, a C₁₋₃₀ alkylene group, or a C₁₋₃₀ alkylene group containing an ether bond.

Specific examples of the compound (31) include trifluoroethanol, trifluoropropanol, and trifluorobutanol.

The hydroxyl group of the compound (31) is converted to -OTf (Tf is a trifluoromethylsulfonyl group) by a conventional method, thereby obtaining a compound (32): F₃C-R^{j33}-OTf.

The present method includes the following step (I').
(I'): The above compound (32) is mixed with a compound (33) having a reactive group to obtain a carbonyl group containing compound (34).

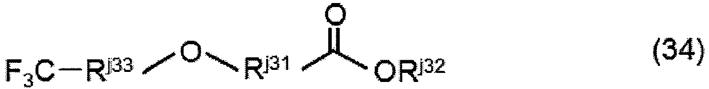

Here, examples of the reactive group may include a hydroxyl group, a carboxyl group, Cl, F, and an ester group in which a carboxyl group is esterified.

Specific examples of the compound (33) having a reactive group may include: a compound having a hydroxyl group at an end, such as tert-butyl 9-hydroxy-4,7-dioxanonanoate, tert-butyl 12-hydroxy-4,7,10-trioxadodecanoate, and tert-butyl 1-hydroxy-3,6,9,12-tetraoxapentadecan-15-oate; and a compound having a carboxyl group at an end, such as 10-hydroxydecanoic acid, 11-hydroxyundecanoic acid, 12-hydroxydodecanoic acid, 13-hydroxytridecanoic acid, 14-hydroxytetradecanoic acid, 15-hydroxypentadecanoic acid, 16-hydroxyhexadecanoic acid, 17-hydroxyheptadecanoic acid, 18-hydroxyoctadecanoic acid, 19-hydroxynonadecanoic acid, 20-hydroxyeicosanoic acid, 21-hydroxyheneicosanoic acid, 22-hydroxydocosanoic acid, 23-hydroxytricosanoic acid, 24-hydroxytetracosanoic acid, 25-hydroxypentacosanoic acid, and 30-hydroxytriacontanoic acid; and methyl esters and acid chlorides thereof.

R^{j31} is a divalent organic group, and is, for example, a group having a polyether group or an alkylene group, and specifically, a -(R^{j35}O)ₙ-R^{j36}- group or a C₁₋₃₀ alkylene group.

R^{j35} is a C₁₋₃ alkylene group, such as an ethylene group, and R^{j36} is a C₁₋₃ alkylene group, such as an ethylene group.

n is an integer of 2 to 150, such as an integer of 2 to 50.

R^{j32} is a lower alkyl group, such as a methyl group, an ethyl group, a propyl group, a butyl group, or a tert-butyl group, and is specifically a methyl group or a tert-butyl group.

The reaction temperature is not limited. For example, the reaction can be performed at a reaction temperature of -80 to 200°C, such as -50 to 100°C, and specifically -20 to 50°C.

The solvent to be used can be the same one as in Production Method 1.

### (Synthesis Method 2)

In the present method, a compound (31) having a group containing F₃C- and a hydroxyl group: F₃C-R^{j33}-OH is used as a raw material to synthesize an olefin containing compound. Each sign is the same as defined above.

The hydroxyl group of the compound (31) is converted to -OTf (Tf is a trifluoromethylsulfonyl group) by a conventional method to produce a compound (32): F₃C-R^{j33}-OTf.

The present method includes the following step (I').
(I'): The above compound (32) is mixed with a compound (35) having a reactive group: HO-R^{j31}-CH=CH₂ to obtain an olefin containing compound (36).

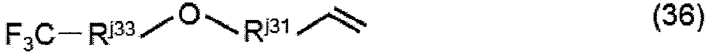

R^{j33} and R^{j31} are the same as defined above.

The reaction temperature and the solvent are the same as defined in Production Method 2.

### (Synthesis Method 3)

In the present method, methyl halodifluoroacetate and a compound (41) having a halogen atom at an end: X-(CH₂)ₙ-R^{j41} (wherein R^{j41} is CH=CH₂, COOH, COOR^{j42}, or COR^{j43}, R^{j42} is a C₁₋₆ alkyl group, R^{j43} is a halogen atom, and preferably a chlorine atom, X is a halogen atom, and preferably a bromine atom, and n is an arbitrary integer) are allowed to react in the presence of a copper salt such as copper iodide and a fluoride ion such as potassium fluoride to synthesize CF₃-(CH₂)ₙ-R^{j41}. Specific examples of the methyl halodifluoroacetate include methyl chlorodifluoroacetate, methyl bromodifluoroacetate, and methyl difluoroiodoacetate. By using the olefin compound (41) having a halogen atom at an end, a compound in which R^{j41} is CH=CH₂ can be obtained. Specific examples of the olefin compound (41) having a halogen atom at an end include allyl chloride, ally bromide, and allyl iodide.

### (Synthesis Method 4)

In the present method, methyl difluoro(fluorosulfonyl)acetate and an olefin compound (41) having a halogen atom at an end: X-(CH₂)ₙ-R^{j41} (wherein R^{j41} is CH=CH₂, COOH, COOR^{j42}, or COR^{j43}, R^{j42} is a C₁₋₆ alkyl group, R^{j43} is a halogen atom, and preferably a chlorine atom, X is a halogen atom, and preferably a bromine atom, and n is an arbitrary integer) are allowed to react in the presence of a copper salt such as copper iodide to synthesize CF₃-(CH₂)ₙ-R^{j41}. By using the olefin compound (41) having a halogen atom at an end, a compound in which R^{j41} is CH=CH₂ can be obtained. Specific examples of the olefin compound (41) having a halogen atom at an end include allyl chloride, ally bromide, and allyl iodide.

### (Synthesis Method 5)

In the present method, (trifluoromethyl)trimethylsilane and an aldehyde having a functional group at an end are allowed to react in the presence of a fluoride ion such as tetrabutylammonium fluoride to synthesize CF₃-CH(OH)(CH₂)ₙ-R^{j41} (wherein R^{j41} is CH=CH₂, COOH, COOR^{j42}, or COR^{j43}, R^{j42} is a C₁₋₆ alkyl group, R^{j43} is a halogen atom, and preferably a chlorine atom, X is a halogen atom, and preferably a bromine atom, and n is an arbitrary integer), and the hydroxyl group is oxidized to synthesize CF₃-C(=O)(CH₂)ₙ-R^{j41}. By using an aldehyde having an olefin at an end, a compound in which R^{j41} is CH=CH₂ can be obtained. Specific examples of the aldehyde having an olefin at an end include 2-propenal, 3-butenal, 4-pentenal, 5-hexanal, 6-heptenal, 7-octenal, 8-nonenal, 9-decenal, 10-undecenal, 11-dodecenal, 12-tridecenal, 13-tetradecenal, 14-pentadecenal, 15-hexadecenal, 16-heptadecenal, 17-octadecenal, 18-nonadecenal, 19-icosenal, 20-henicosenal, 23-tetracosenal, and 29-triacontenal. Examples of the hydroxyl group oxidizing agent include 1,1,1-triacetoxy-1,1-dihydro-1,2-benziodoxol-3(1H)-one.

### (Synthesis Method 6)

In the present method, a carboxylic acid or an ester having a halogen at an end is allowed to react with thiophosgene in the presence of a fluoride ion such as potassium fluoride to synthesize CF₃-S-(CH₂)ₙ-C(=O)OR^{j51} (wherein R^{j51} is a hydrogen atom or a C₁₋₄ alkyl group). Specific examples of the ester having a halogen at an end may include methyl 10-bromodecanoate, methyl 11-bromoundecanoate, methyl 12-bromododecanoate, methyl 13-bromotridecanoate, methyl 14-bromotetradecanoate, methyl 15-bromopentadecanoate, methyl 16-bromohexadecanoate, methyl 17-bromoheptadecanoate, methyl 18-bromooctadecanoate, methyl 19-bromononadecanoate, methyl 20-bromoeicosanoate, methyl 21-bromoheneicosanoate, methyl 22-bromodocosanoate, methyl 23-bromotricosanoate, methyl 24-bromotetracosanoate, methyl 25-bromopentacosanoate, methyl 30-bromotriacontanoate, ethyl 10-bromodecanoate, ethyl 11-bromoundecanoate, ethyl 12-bromododecanoate, ethyl 13-bromotridecanoate, ethyl 14-bromotetradecanoate, ethyl 15-bromopentadecanoate, ethyl 16-bromohexadecanoate, ethyl 17-bromoheptadecanoate, ethyl 18-bromooctadecanoate, ethyl 19-bromononadecanoate, ethyl 20-bromoeicosanoate, ethyl 21-bromoheneicosanoate, ethyl 22-bromodocosanoate, ethyl 23-bromotricosanoate, ethyl 24-bromotetracosanoate, ethyl 25-bromopentacosanoate, and ethyl 30-bromotriacontanoate.

### (Synthesis Method 7)

In the present method, an olefin having a halogen at an end is allowed to react with thiophosgene in the presence of a fluoride ion such as potassium fluoride to synthesize CF₃-S-(CH₂)ₙ-CH=CH₂. Specific examples of the olefin having a halogen at an end may include 11-bromoundecene, 12-bromododecene, 13-bromotridecene, 14-bromotetradecene, 15-bromopentadecene, 16-hexadecene, 17-heptadecene, 18-bromooctadecene, 19-bromononadecene, 20-bromoeicosene, 21-bromoheneicosene, 24-bromotetracosene, and 30-bromotriacontene.

### (Synthesis Method 8)

In the present method, a carboxylic acid or an ester having a halogen at an end is allowed to react with [(CH₃)₄N]⁺[N(CF₃)₂] to synthesize (CF₃)₂N-(CH₂)ₙ-C(=O)OR^{j51} (wherein R^{j51} is a hydrogen atom or a C₁₋₄ alkyl group). Specific examples of the ester having a halogen at an end may include methyl 10-bromodecanoate, methyl 11-bromoundecanoate, methyl 12-bromododecanoate, methyl 13-bromotridecanoate, methyl 14-bromotetradecanoate, methyl 15-bromopentadecanoate, methyl 16-bromohexadecanoate, methyl 17-bromoheptadecanoate, methyl 18-bromooctadecanoate, methyl 19-bromononadecanoate, methyl 20-bromoeicosanoate, methyl 21-bromoheneicosanoate, methyl 22-bromodocosanoate, methyl 23-bromotricosanoate, methyl 24-bromotetracosanoate, methyl 25-bromopentacosanoate, methyl 30-bromotriacontanoate, ethyl 10-bromodecanoate, ethyl 11-bromoundecanoate, ethyl 12-bromododecanoate, ethyl 13-bromotridecanoate, ethyl 14-bromotetradecanoate, ethyl 15-bromopentadecanoate, ethyl 16-bromohexadecanoate, ethyl 17-bromoheptadecanoate, ethyl 18-bromooctadecanoate, ethyl 19-bromononadecanoate, ethyl 20-bromoeicosanoate, ethyl 21-bromoheneicosanoate, ethyl 22-bromodocosanoate, ethyl 23-bromotricosanoate, ethyl 24-bromotetracosanoate, ethyl 25-bromopentacosanoate, and ethyl 30-bromotriacontanoate.

### (Synthesis Method 9)

In the present method, an olefin having a halogen at an end is allowed to react with [(CH₃)₄N]⁺[N(CF₃)₂] to synthesize (CF₃)₂N-(CH₂)ₙ-CH=CH₂. Specific examples of the olefin having a halogen at an end may include 11-bromoundecene, 12-bromododecene, 13-bromotridecene, 14-bromotetradecene, 15-bromopentadecene, 16-hexadecene, 17-heptadecene, 18-bromooctadecene, 19-bromononadecene, 20-bromoeicosene, 21-bromoheneicosene, 24-bromotetracosene, and 30-bromotriacontene.

### (Synthesis Method 10)

In the present method, a compound (101) having a hydroxyl group and a carbonyl group: HO-R^{j33}-COOR^{j32} is used as a raw material to synthesize a trifluoromethoxy group containing compound.

R^{j33} is an alkylene group, such as a C₁₋₃₀ alkylene group.
The specific examples of the compound (101) may include compounds having a carboxyl group at an end, such as 3-hydroxypropionic acid, 4-hydroxybutyric acid, 5-hydroxyvaleric acid, 6-hydroxyhexanoic acid, 7-hydroxyheptanoic acid, 8-hydroxyoctanoic acid, 9-hydroxynonanoic acid, 10-hydroxydecanoic acid, 12-hydroxylauric acid, 14-hydroxymyristic acid, 16-hydroxypalmitic acid, 17-hydroxyheptadecanoic acid, 18-hydroxy stearic acid, 20-hydroxyeicosanoic acid, 21-hydroxyheneicosanoic acid, 22-hydroxydocosanoic acid, 23-hydroxytricosanoic acid, 24-hydroxytetracosanoic acid, 25-hydroxypentacosanoic acid, and 30-hydroxytriacontanoic acid, and methyl esters and acid chlorides thereof.

Carbon disulfide is applied to the hydroxyl group of the compound (101) in the presence of a base such as sodium hydride, and iodomethane is added thereto to obtain a xanthate ester (102): H₃CS-C(=S)-O-R^{j33}-COOR^{j32}. Hydrogen fluoride pyridine and 1,3-dibromo-5,5-dimethylhydantoin are applied to the xanthate ester (102) to obtain a desired trifluoromethoxy group containing compound (103): F₃CO-R^{j33}-COOR^{j32}.

Alternatively, an arylsulfonic acid trifluoromethyl ester is applied to the hydroxyl group of the compound (101) in the presence of cesium fluoride, tetrabutylammonium bromide or the like in an aprotic polar solvent such as NMP, DMF or HMPA (hexamethylphosphoric triamide) to obtain a desired trifluoromethoxy group containing compound (103): F₃CO-R^{j33}-COOR^{j32}.

### (Synthesis Method 11)

In the present method, a compound (111) having a hydroxyl group and an olefin: HO-R^{j33}-CH=CH₂ is used as a raw material to synthesize a trifluoromethoxy group containing compound.

R^{j33} is an alkylene group such as a C₁₋₃₀ alkylene group.

Examples of the olefin group containing compound include 3-hydroxypropene, 4-hydroxy-1-butene, 5-hydroxy-1-pentene, 6-hydroxy-1-hexene, 7-hydroxy-1-heptene, 8-hydroxy-1-octene, 9-hydroxy-1-nonene, 10-hydroxy-1-decene, 11-hydroxy-1-undecene, 12-hydroxy-1-dodecene, 13-hydroxy-1-tridecene, 14-hydroxy-1-tetradecene, 15-hydroxy-1-pentadecene, 16-hydroxy-1-hexadecene, 17-hydroxy-1-heptadecene, 18-hydroxy-1-octadecene, 19-hydroxy-1-nonadecene, 20-hydroxy-1-icosene, 21-hydroxy-1-henicosene, 24-hydroxy-1-tetracosene, and 30-hydroxy-1-triacontene.

Carbon disulfide is applied to the hydroxyl group of the compound (111) in the presence of a base such as sodium hydride, and iodomethane is added thereto to obtain a xanthate ester (112): H₃CS-C(=S)-O-R^{j33}-COOR^{j32}. Hydrogen fluoride pyridine and 1,3-dibromo-5,5-dimethylhydantoin are applied to the xanthate ester (102) to obtain a desired trifluoromethoxy group containing compound (113): F₃CO-R^{j33}-CH=CH₂.

Alternatively, an arylsulfonic acid trifluoromethyl ester is applied to the hydroxyl group of the compound (111) in the presence of cesium fluoride, tetrabutylammonium bromide or the like in an aprotic polar solvent such as NMP, DMF or HMPA (hexamethylphosphoric triamide) to obtain a desired trifluoromethoxy group containing compound (113): F₃CO-R^{j33}-CH=CH₂.

### [Surface-Treating Agent]

The surface-treating agent of the present disclosure will be described below.

The surface-treating agent of the present disclosure contains at least one fluorine containing silane compound represented by the formula (1).

The surface-treating agent of the present disclosure may further contain a condensed product of the fluorine containing silane compound.

In one embodiment, the surface-treating agent of the present disclosure contains at least one of the fluorine containing silane compound and a compound composed of a condensed product in which at least part of the fluorine containing silane compound is condensed.

In one embodiment, the content of the compound represented by the formula (1) is preferably 0.1 to 50.0% by mass, more preferably 1.0 to 30.0% by mass, even more preferably 5.0 to 25.0% by mass, and particularly preferably 10.0 to 20.0% by mass based on the entirety of the surface-treating agent.

In another embodiment, the content of the compound represented by the formula (1) is preferably 0.001 to 30% by mass, more preferably 0.01 to 10% by mass, even more preferably 0.05 to 5% by mass, and particularly preferably 0.05 to 2% by mass based on the entirety of the surface-treating agent.

In one embodiment, the surface-treating agent of the present disclosure may contain a compound represented by the formula (1), and a condensed product in which at least part of the compound represented by the formula (1) is condensed.

In the above embodiment, the content of the condensed product may be preferably 40% by mass or less and more preferably 30% by mass or less based on the sum of the compound represented by the formula (1) and the condensed product. Here, the content of the condensed product can be determined from, for example, the abundance ratio of the peak position to the area in GPC (gel permeation chromatography).

The composition of the present disclosure may contain a solvent, a (non-reactive) silicone compound that may be understood as a silicone oil (hereinafter, referred to as "silicone oil"), an amine compound, an alcohol, a catalyst, a surfactant, a polymerization inhibitor, a sensitizer, and the like.

In one embodiment, the surface-treating agent of the present disclosure contains a compound represented by R⁹⁰-OH.

R⁹⁰ is a monovalent organic group, preferably a C₁₋₂₀ alkyl group or a C₃₋₂₀ alkylene group, and these groups are optionally substituted with one or more substituents. Examples of the substituents include a hydroxyl group and -OR⁹¹ (where R⁹¹ is a C₁₋₁₀ alkyl group, preferably a C₁₋₃ alkyl group, such as a methyl group).

In one embodiment, the surface-treating agent of the present disclosure may contain a solvent selected from compounds represented by R⁸¹OR⁸², R⁸³ₙ₈C₆H₆₋ₙ₈, R⁸⁴R⁸⁵R⁸⁶Si-(O-SiR⁸⁷R⁸⁸)ₘ₈-R⁸⁹, and (OSiR⁸⁷R⁸⁸)ₘ₉
wherein
R⁸¹ to R⁸⁹ are each independently a monovalent organic group having 1 to 10 carbon atoms,
m8 is an integer of 1 to 6,
m9 is an integer of 3 to 8, and
n8 is an integer of 0 to 6.

The monovalent organic group having 1 to 10 carbon atoms may be linear or may be branched, and may further contain a cyclic structure.

In one embodiment, the monovalent organic group having 1 to 10 carbon atoms may contain an oxygen atom, a nitrogen atom, or a halogen atom.

In another embodiment, the monovalent organic group having 1 to 10 carbon atoms does not contain a halogen atom.

In a preferred embodiment, the monovalent organic group having 1 to 10 carbon atoms is a hydrocarbon group optionally substituted with a halogen, and preferably a hydrocarbon group not substituted with a halogen.

In one embodiment, the hydrocarbon group is linear.

In another embodiment, the hydrocarbon group is branched.

In another embodiment, the hydrocarbon group contains a cyclic structure.

In one embodiment, the solvent is R⁸¹OR⁸².

R⁸¹ and R⁸² may be, each independently, preferably a hydrocarbon group having 1 to 8 carbon atoms, and more preferably a C₁₋₆ alkyl group or a C₅₋₈ cycloalkyl group.

In one embodiment, the solvent is R⁸³ₙ₈C₆H₆₋ₙ₈.

C₆H₆₋ₙ₈ is an n8-valent benzene ring. That is, R⁸³ₙ₈C₆H₆₋ₙ₈ is benzene substituted with n8 R⁸³ groups.

R⁸³ may be each independently a halogen, or a C₁₋₆ alkyl group optionally substituted with a halogen.

n8 is preferably an integer of 1 to 3.

In one embodiment, the solvent is R⁸⁴R⁸⁵R⁸⁶Si-(O-SiR⁸⁷R⁸⁸)ₘ₈-R⁸⁹.

In one embodiment, the solvent is (OSiR⁸⁷R⁸⁸)ₘ₉. (OSiR⁸⁷R⁸⁸)ₘ₉ is a cyclic siloxane formed by multiple OSiR⁸⁷R⁸⁸ units bonded in a cyclic form.

R⁸⁴ to R⁸⁹ are each independently a hydrogen atom or a C₁₋₆ alkyl group, preferably a C₁₋₆ alkyl group, more preferably a C₁₋₃ alkyl group, and still more preferably a methyl group.

m8 is preferably an integer of 1 to 6, more preferably an integer of 1 to 5, and still more preferably 1 to 2.

m9 is preferably an integer of 3 to 6, and more preferably an integer of 3 to 5.

In one embodiment, examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), C₆F₁₃H (for example, ASAHIKLIN(R) AC-2000 manufactured by AGC Inc.), and 1,1,2,2,3,3,4-heptafluorocyclopentane (for example, Zeorolla(R) H manufactured by ZEON Corporation); fluorine containing hydrocarbons such as 1,1,2-trichloro-1,2,2-trifluoroethane, 1,2-dichloro-1,1,2,2-tetrafluoroethane, 1,1-dichloro-1,2,2,3,3-pentafluoropropane (HCFC 225), and 1,3-bis(trifluoromethyl)benzene; fluorine containing alcohols such as CF₃CH₂OH, CF₃CF₂CH₂OH, and (CF₃)₂CHOH; alkyl perfluoroalkyl ethers (the perfluoroalkyl group and the alkyl group may be linear or branched) such as hydrofluoroethers (HFE) (for example, perfluoropropyl methyl ether (C₃F₇OCH₃) (for example, Novec(TM) 7000 manufactured by SUMITOMO 3M), perfluorobutyl methyl ether (C₄F₉OCH₃) (for example, Novec(TM) 7100 manufactured by SUMITOMO 3M), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec(TM) 7300 manufactured by SUMITOMO 3M), or CF₃CH₂OCF₂CHF₂ (for example, ASAHIKLIN(R) AE-3000 manufactured by AGC Inc.)), hydrofluoroolefins; ethers such as CF₃CH=CHCl (for example, CELEFIN(R) 1233Z manufactured by Central Glass Co., Ltd.), CHF₂CF=CHCl (for example, AMOLEA(R) AS-300 manufactured by AGC Inc.), and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethylcyclopentasiloxane, decamethyltetrasiloxane, dodecamethylpentasiloxane, and tetradecamethylhexasiloxane; and dimethylsulfoxide. Alternatively, the solvent may be a mixed solvent of two or more of such solvents. In particular, preferable are aliphatic hydrocarbons, aromatic hydrocarbons, esters, glycol ethers, alcohols, ether alcohols, and siloxanes. For example, preferable are hexane, cyclohexane, heptane, octane, nonane, decane, undecane, dodecane, mineral spirits, benzene, toluene, xylene, naphthalene, methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl-2-hydroxybutylate, ethyl acetoacetate, amyl acetate, methyl lactate, ethyl lactate, methyl 3-methoxypropionate, ethyl 3-methoxypropionate, methyl 2-hydroxyisobutylate, ethyl 2-hydroxyisobutylate propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, octamethylcyclopentasiloxane, 1,3-bis(trifluoromethyl)benzene, C₆F₁₃CH₂CH₃, C₆F₁₃H, 1,1,2,2,3,3,4-heptafluorocyclopentane, 1,1,2-trichloro-1,2,2-trifluoroethane, 1,2-dichloro-1,1,2,2-tetrafluoroethane, 1,1-dichloro-1,2,2,3,3 -pentafluoropropane, 1,3-bis(trifluoromethyl)benzene, CF₃CH₂OH, CF₃CF₂CH₂OH, (CF₃)₂CHOH, perfluoropropyl methyl ether, perfluorobutyl methyl ether, perfluorobutyl ethyl ether, perfluorohexyl methyl ether, CF₃CH₂OCF₂CHF₂, CF₃CH=CHCl, and CHF₂CF=CHCl.

The silicone oil is not limited, and examples thereof include a compound represented by the following general formula (3a):

R^{1a}-(SiR^{3a}₂-O)ₐ₁-SiR^{3a}₂-R^{1a} ... (3a)

wherein
R^{1a} is each independently a hydrogen atom or a hydrocarbon group,
R^{3a} is each independently a hydrogen atom or a hydrocarbon group, and
a1 is 2 to 3,000.

R^{3a} is each independently a hydrogen atom or a hydrocarbon group. Such a hydrocarbon group is optionally substituted.

R^{3a} is, each independently, preferably an unsubstituted hydrocarbon group or a hydrocarbon group substituted with a halogen atom. Such a halogen atom is preferably a fluorine atom.

R^{3a} is, each independently, preferably a C₁₋₆ alkyl group or aryl group optionally substituted with a halogen atom, and more preferably a C₁₋₆ alkyl group or aryl group.

The C₁₋₆ alkyl group may be linear or may be branched, and is preferably linear. The C₁₋₆ alkyl group is preferably a C₁₋₃ alkyl group, and more preferably a methyl group.

The aryl group is preferably a phenyl group.

In one embodiment, R^{3a} is each independently a C₁₋₆ alkyl group, preferably a C₁₋₃ alkyl group, and more preferably a methyl group.

In another embodiment, R^{3a} is a phenyl group.

In another embodiment, R^{3a} is a methyl group or a phenyl group, and preferably a methyl group.

R^{1a} is each independently a hydrogen atom or a hydrocarbon group, and is the same as defined for R^{3a}.

R^{1a} is, each independently, preferably a C₁₋₆ alkyl group or aryl group optionally substituted with a halogen atom, and more preferably a C₁₋₆ alkyl group or aryl group.

In one embodiment, R^{1a} is each independently a C₁₋₆ alkyl group, preferably a C_{1- 3} alkyl group, and more preferably a methyl group.

In another embodiment, R^{1a} is a phenyl group.

In another embodiment, R^{1a} is a methyl group or a phenyl group, and preferably a methyl group.

a1 is 2 to 1,500. a1 may be preferably 5 or more, more preferably 10 or more, and even more preferably 15 or more, such as 30 or more or 50 or more. a1 may be preferably 1,000 or less, more preferably 500 or less, even more preferably 200 or less, and even more preferably 150 or less, such as 100 or less or 80 or less.

a1 may be preferably 5 to 1,000, more preferably 10 to 500, even more preferably 15 to 200, and even more preferably 15 to 150.

Examples of another silicone oil include a compound represented by the following (3b):

R^{1a}-R^{SO2}-R^{3a} ... (3b)

wherein
R^{1a} is each independently a hydrocarbon group,
R^{3a} is each independently a hydrocarbon group,
R^{SO2} is a divalent siloxane containing group, and has the same definition as described for the divalent siloxane containing group in X^{D} in the formula (1).

The silicone oil may have an average molecular weight of 500 to 1,000,000, and preferably 1,000 to 100,000. The molecular weight of the silicone oil may be measured using GPC.

As the silicone oil, a linear or cyclic silicone oil in which a1 in -(SiR^{3a}₂-O)ₐ₁- is 30 or less can be used, for example. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, or the like. Examples of the cyclic silicone oil include cyclic dimethylsiloxane oil.

The silicone oil may be contained in an amount of, for example, 0 to 50% by mass, preferably 0.001 to 30% by mass, and more preferably 0.1 to 5% by mass, based on the composition of the present disclosure.

In the composition of the present disclosure, such a silicone oil may be contained in an amount of, for example, 0 to 300 parts by mass, preferably 0 to 100 parts by mass, more preferably 0 to 50 parts by mass, and still more preferably 0 to 10 parts by mass, based on 100 parts by mass in total of the compound of the present disclosure (in the case of two or more types, the total thereof, and the same applies below).

The silicone oil contributes to improving the surface lubricity of the surface-treating layer.

Examples of the alcohol include methanol, ethanol, iso-propanol, n-butanol, isobutanol, tert-butanol, sec-butanol, 3-pentanol, octyl alcohol, 3-methyl-3-methoxybutanol, and tert-amyl alcohol. These alcohols added to the composition improves the stability of the composition.

Examples of the catalyst include acids (for example, acetic acid, hydrochloric acid, nitric acid, sulfuric acid, phosphoric acid, sulfonic acid, p-toluenesulfonic acid, trifluoroacetic acid, and the like), bases (for example, sodium hydroxide, potassium hydroxide, ammonia, triethylamine, diethylamine, and the like), transition metals (for example, Ti, Ni, Sn, Zr, Al, B, Si, Ta, Nb, Mo, W, Cr, Hf, V, and the like), and sulfur containing compounds or nitrogen containing compounds having an unshared electron pair in the molecular structure (for example, sulfoxide compounds, aliphatic amine compounds, aromatic amine compounds, phosphoric acid amide compounds, amide compounds, and urea compounds).

Examples of the aliphatic amine compounds may include diethylamine and triethylamine. Examples of the aromatic amine compounds may include aniline and pyridine.

In a preferred embodiment, the transition metal is contained as a transition metal compound represented by M-R, wherein M is a transition metal atom and R is a hydrolyzable group. By making the transition metal compound a compound in which a transition metal and a hydrolyzable group are bonded, the transition metal atom can be contained in the surface-treating layer more efficiently, and the friction durability and the chemical resistance of the surface-treating layer can be further improved.

The above hydrolyzable group means a group that can undergo a hydrolysis reaction in the same manner as the hydrolyzable group with respect to the above compound, that is, means a group that can be removed from the transition metal atom by a hydrolysis reaction. Examples of the hydrolyzable group include -OR^{m}, -OCOR^{m}, -ON=CR^{m}₂, -NR^{m}₂, -NHR^{m}, -NCO, and a halogen (in these formulae, R^{m} represents a substituted or unsubstituted C₁₋₄ alkyl group).

In a preferred embodiment, the hydrolyzable group is -OR^{m}, and preferably methoxy or ethoxy. By using an alkoxy group as the hydrolyzable group, the transition metal atom can be contained in the surface-treating layer more efficiently, and the friction durability and the chemical resistance of the surface-treating layer can be further improved.

In one embodiment, the hydrolyzable group may be the same as the hydrolyzable group contained in the compound described above. By making the hydrolyzable groups in the compound and the transition metal compound the same group, even when such hydrolyzable groups are mutually exchanged, its effect can be minimized.

In another embodiment, the above hydrolyzable group may be different from the hydrolyzable group contained in the compound described above. By making the hydrolyzable groups in the above compound and the transition metal compound different, the reactivity of hydrolysis can be controlled.

In one embodiment, the above hydrolyzable group and the hydrolyzable group contained in the compound described above may be mutually interchanged in the composition.

In a preferred embodiment, the transition metal compound may be Ta(OR^{m})₅ (wherein R^{m} is a substituted or unsubstituted C₁₋₄ alkyl group), preferably Ta(OCH₂CH₃)₅ or Si(OR^{m})₁₋ₘ₁R^{m'}ₘ₁ (wherein R^{m} is a substituted or unsubstituted C₁₋₄ alkyl group, R^{m'} is a C₁₋₄ alkyl group, and m1 is 0 or 1), and preferably tetraethoxysilane, methyltrimethoxysilane, methyltriethoxysilane, tetraisopropoxysilane, dimethyldiethoxysilane, or dimethyldimethoxysilane.

The catalyst may be contained in an amount of, for example, 0.0002% by mass or more based on the entirety of the composition. The catalyst may be contained in an amount of preferably 0.02% by mass or more, and more preferably 0.04% by mass or more, based on the entirety of the composition. The catalyst may be contained in an amount of, for example, 10% by mass or less based on the entirety of the composition, and in particular, it is contained in an amount of 1% by mass or less. The composition of the present disclosure can contribute to the formation of a surface-treating layer with better durability when the catalyst is contained in the concentration as described above.

The content of the catalyst is preferably 0 to 10% by mass, more preferably 0 to 5% by mass, and particularly preferably 0 to 1% by mass, based on the compound of the present disclosure.

The catalyst promotes hydrolysis and dehydrative condensation of the compound of the present disclosure, and promotes formation of a layer formed of the composition of the present disclosure.

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The composition of the present disclosure may contain, in addition to the components described above, trace amounts of Pt, Rh, Ru, 1,3-divinyltetramethyldisiloxane, triphenylphosphine, NaCl, KCl, silane condensation product, and the like as impurities.

In one embodiment, the composition of the present disclosure is for a dry coating method, and preferably for vacuum deposition.

In one embodiment, the composition of the present disclosure is for a wet coating method, and preferably for dip coating.

The composition of the present disclosure can be formed into pellets by impregnating a porous material such as a porous ceramic material or a metal fiber such as a fiber obtained by, for example, solidifying steel wool in a cotton-like form therewith. Such pellets can be used in, for example, vacuum deposition.

The composition of the present disclosure is preferably used as a surface-treating agent or as a component of a surface-treating agent.

Hereinafter, the article of the present disclosure will be described.

The article of the present disclosure includes a substrate and a layer (surface-treating layer) on the substrate surface, the layer being formed of the surface-treating agent of the present disclosure.

The substrate usable in the present disclosure may be composed of any suitable material such as glass, resin (which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film), such as a hard coat layer or an antireflection layer, may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, Ta₃O₅, Nb₂O₅, HfO₂, Si₃N₄, CeO₂, MgO, Y₂O₃, SnO₂, MgF₂, and WO₃. One of these inorganic substances may be used singly, or two or more types thereof may be used in combination (for example, as a mixture). In the case of a multi-layer antireflection layer, it is preferable to use SiO₂ and/or SiO for the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The shape of the substrate is not limited, and may be, for example, in the form of a plate, a film, or the like. The surface region of the substrate on which a surface-treating layer is to be formed may be at least a portion of the substrate surface, and may be suitably determined according to the application, specific configuration, and the like of an article to be produced.

In one embodiment, the substrate, or at least the surface portion thereof, may be composed of a material originally having a hydroxyl group. Examples of the material include glass, as well as metal (in particular, base metal) where a natural oxidized film or a thermal oxidized film is formed on the surface, ceramics, and semiconductors. Alternatively, when the substrate has an insufficient amount of hydroxyl groups or when the substrate originally has no hydroxyl group as in resin and the like, a pre-treatment may be performed on the substrate to thereby introduce or increase hydroxyl groups on the surface of the substrate. Examples of such a pre-treatment include a plasma treatment (for example, corona discharge) and ion beam irradiation. The plasma treatment can be suitably utilized to not only introduce or increase hydroxyl groups on the substrate surface, but also clean the substrate surface (remove foreign matter and the like). Another example of such a pre-treatment is a method wherein a monolayer of a surface adsorbent having a carbon-carbon unsaturated bonding group is formed on the surface of the substrate by a LB method (a Langmuir-Blodgett method), a chemical adsorption method, or the like beforehand, and thereafter cleaving the unsaturated bond under an atmosphere containing oxygen, nitrogen, or the like.

In another embodiment, the substrate, or at least the surface portion thereof, may be composed of a material comprising another reactive group such as a silicone compound having one or more Si-H groups or alkoxysilane.

In a preferred embodiment, the substrate is glass. As the glass, sapphire glass, soda-lime glass, alkali aluminosilicate glass, borosilicate glass, alkali-free glass, crystal glass, quartz glass, and crystallized glass are preferred, and chemically tempered soda-lime glass, chemically tempered alkali aluminosilicate glass, and chemically bonded borosilicate glass are particularly preferred.

In one embodiment, the article of the present disclosure may include a silicon oxide containing intermediate layer between the glass and the surface-treating layer. By providing such an intermediate layer, the adhesion between the glass and the surface-treating layer is improved, and the durability is improved.

In a preferred embodiment, the intermediate layer may contain an alkali metal in addition to silicon oxide.

Examples of the alkali metal include lithium, sodium, and potassium. The alkali metal is preferably sodium.

The thickness of the intermediate layer is not limited, and it is preferably 1 to 200 nm, and particularly preferably 1 to 20 nm. By setting the thickness of the intermediate layer to the lower limit value of the above range or more, the improvement effect of adhesion by the intermediate layer becomes greater.

The concentration of alkali metal atoms in the intermediate layer can be measured by various surface analysis apparatuses such as TOF-SIMS, XPS, and XRF.

The proportion of alkali metal atoms in all atoms of the entire intermediate layer can be obtained by XPS depth profile analysis by ion sputtering, which is performed by alternately repeating XPS measurements and etching of the surface by ion sputtering using an ion gun built into the XPS device.

In the intermediate layer, the average value of the concentration of alkali metal in the area with a depth of 1 nm or less from the surface in contact with the surface-treating layer is determined by obtaining the depth profile of the concentration of alkali metal atoms by TOF-SIMS (time-of-flight secondary ion mass spectrometry) depth profile analysis by ion sputtering, and then calculating the average value of the concentration of alkali metal atoms in the profile. The TOF-SIMS depth profile analysis by ion sputtering is performed by alternately repeating TOF-SIMS measurements and etching of the surface by ion sputtering using an ion gun built into the TOF-SIMS device.

The article of the present disclosure can be produced by forming a layer of the surface-treating agent of the present disclosure on the surface of the substrate and posttreating this layer as necessary, thereby forming a layer from the surface-treating agent of the present disclosure.

The layer of the surface-treating agent of the present disclosure can be formed by applying the surface-treating agent on the surface of the substrate such that the surface-treating agent coats the surface. The coating method is not limited. For example, a wet coating method and a dry coating method can be used.

Examples of the wet coating method include dip coating, spin coating, flow coating, spray coating, roll coating, gravure coating, wipe coating, squeegee coat method, die coat, inkjet, cast method, Langmuir-Blodgett method, and similar methods.

Examples of the dry coating method include deposition (usually, vacuum deposition), sputtering, CVD, and similar methods. Specific examples of the deposition method (usually, a vacuum deposition method) include resistive heating, high-frequency heating using electron beam, microwave, or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the substrate surface after being diluted with a solvent. From the viewpoint of the stability of the composition of the present disclosure and the volatility of the solvent, the following solvents are preferably used: aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), C₆F₁₃H (for example, ASAHIKLIN(R) AC-2000 manufactured by AGC Inc.), and 1,1,2,2,3,3,4-heptafluorocyclopentane (for example, Zeorolla(R) H manufactured by ZEON Corporation); fluorine containing hydrocarbons such as 1,1,2-trichloro-1,2,2-trifluoroethane, 1,2-dichloro-1,1,2,2-tetrafluoroethane, 1,1-dichloro-1,2,2,3,3-pentafluoropropane (HCFC 225), and 1,3-bis(trifluoromethyl)benzene; fluorine containing alcohols such as CF₃CH₂OH, CF₃CF₂CH₂OH, and (CF₃)₂CHOH; alkyl perfluoroalkyl ethers (the perfluoroalkyl group and the alkyl group may be linear or branched) such as hydrofluoroethers (HFE) (for example, perfluoropropyl methyl ether (C₃F₇OCH₃) (for example, Novec(TM) 7000 manufactured by SUMITOMO 3M), perfluorobutyl methyl ether (C₄F₉OCH₃) (for example, Novec(TM) 7100 manufactured by SUMITOMO 3M), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec(TM) 7300 manufactured by SUMITOMO 3M), or CF₃CH₂OCF₂CHF₂ (for example, ASAHIKLIN(R) AE-3000 manufactured by AGC Inc.)), hydrofluoroolefins; ethers such as CF₃CH=CHCl (for example, CELEFIN(R) 1233Z manufactured by Central Glass Co., Ltd.), CHF₂CF=CHCl (for example, AMOLEA(R) AS-300 manufactured by AGC Inc.), and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethylcyclopentasiloxane, decamethyltetrasiloxane, dodecamethylpentasiloxane, and tetradecamethylhexasiloxane; and dimethylsulfoxide. Alternatively, the solvent may be a mixed solvent of two or more of such solvents. In particular, preferable are aliphatic hydrocarbons, aromatic hydrocarbons, esters, glycol ethers, alcohols, ether alcohols, and siloxanes. For example, preferable are hexane, cyclohexane, heptane, octane, nonane, decane, undecane, dodecane, mineral spirits, benzene, toluene, xylene, naphthalene, methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl-2-hydroxybutylate, ethyl acetoacetate, amyl acetate, methyl lactate, ethyl lactate, methyl 3-methoxypropionate, ethyl 3-methoxypropionate, methyl 2-hydroxyisobutylate, ethyl 2-hydroxyisobutylate propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, octamethylcyclopentasiloxane, 1,3-bis(trifluoromethyl)benzene, C₆F₁₃CH₂CH₃, C₆F₁₃H, 1,1,2,2,3,3,4-heptafluorocyclopentane, 1,1,2-trichloro-1,2,2-trifluoroethane, 1,2-dichloro-1,1,2,2-tetrafluoroethane, 1,1-dichloro-1,2,2,3,3-pentafluoropropane, 1,3-bis(trifluoromethyl)benzene, CF₃CH₂OH, CF₃CF₂CH₂OH, (CF₃)₂CHOH, perfluoropropyl methyl ether, perfluorobutyl methyl ether, perfluorobutyl ethyl ether, perfluorohexyl methyl ether, CF₃CH₂OCF₂CHF₂, CF₃CH=CHCl, and CHF₂CF=CHCl.

In one embodiment, as the solvent when the wet coating method is used, a compound represented by R⁹⁰-OH can be used, for example. R⁹⁰ is a monovalent organic group, preferably a C₁₋₂₀ alkyl group or a C₃₋₂₀ alkylene group, and these groups are optionally substituted with one or more substituents. Examples of substituents may include a hydroxyl group and -OR⁹¹ (where R⁹¹ is a C₁₋₁₀ alkyl group, preferably a C₁₋₃ alkyl group, such as a methyl group).

When using the dry coating method, the surface-treating agent of the present disclosure may be directly subjected to the dry coating method, or may be diluted with the solvent before being subjected to the dry coating method.

A layer of the surface-treating agent is preferably formed such that the surface-treating agent of the present disclosure coexists in the layer with a catalyst for hydrolysis and dehydration condensation. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure. In the case of a dry coating method, the surface-treating agent of the present disclosure to which a catalyst has been added is directly used to a deposition (usually vacuum deposition) treatment, or a pellet-like material may be used to a deposition (usually vacuum deposition) treatment, wherein the pellets are obtained by impregnating a porous body of metal such as iron or copper with the surface-treating agent of the present disclosure to which the catalyst has been added.

As the catalyst, any appropriate acids or bases, transition metals (such as Ti, Ni, Sn, Zr, Al, or B), sulfur containing compounds or nitrogen containing compounds having an unshared electron pair in the molecular structure (such as sulfoxide compounds, aliphatic amine compounds, aromatic amine compounds, phosphoric acid amide compounds, amide compounds, and urea compounds), and the like can be used. As the acid catalyst, for example, acetic acid, formic acid, trifluoroacetic acid, hydrochloric acid, nitric acid, sulfuric acid, phosphoric acid, sulfonic acid, methanesulfonic acid, or p-toluenesulfonic acid, and the like can be used. Also, as the base catalyst, for example, ammonia, sodium hydroxide, potassium hydroxide, organic amines such as triethylamine and diethylamine, and the like can be used. Examples of the transition metals, aliphatic amine compounds, and aromatic amine compounds include the same as those described above.

The surface-treating layer contained in the article of the present disclosure may have high abrasion durability. In addition, the surface-treating layer may have not only high abrasion durability, but also have, depending on the compositional features of the surface-treating agent used, water-repellency, oil-repellency, antifouling property (for example, preventing fouling such as fingerprints from adhering), waterproof property (preventing water from penetrating into electronic components and the like), surface lubricity (or lubricity, for example, such as removability of fouling including fingerprints by wiping and the like and excellent tactile sensations to the fingers), chemical resistance, and the like, and may be suitably used as a functional thin film.

Therefore, the present disclosure further relates to an optical material having the surface-treating layer in the outermost layer.

The optical material preferably includes a wide variety of optical materials, in addition to optical materials relating to displays and the like as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article of the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for equipment such as cell phones and portable information terminals; disc surfaces of optical discs such as Blu-ray (R) discs, DVD discs, CD-Rs, and MOs; optical fibers; and display surfaces of watches and clocks.

The article of the present disclosure may be medical equipment or a medical material. The article having a layer that is obtained according to the present disclosure may be an automobile interior or exterior member. Examples of the exterior material are as follows: windows, light covers, and external camera covers. Examples of the interior material include the following: instrument panel covers, navigation system touch panels, and decorative interior materials.

The thickness of the layer is not limited. The thickness of the layer in the case of an optical member may be in the range of, for example, 1 to 50 nm, preferably 1 to 30 nm, and more preferably 1 to 15 nm, from the viewpoint of optical performance, abrasion durability, and antifouling property.

The apparatus for performing X-ray photoelectron spectroscopy for measuring the atomic composition and the ratio of constitutional atoms of the surface-treating layer may be XPS or PHI 5000 VersaProbe II manufactured by ULVAC-PHI, Inc. Usable measurement conditions for XPS analysis may be an X-ray source of 25 W monochromatic AlKα radiation, a photoelectron detection surface of 1,400 µm × 300 µm, a photoelectron detection angle in a range of 20° to 90° (for example, 20°, 45°, 90°), a pass energy of 23.5 eV, and sputtering with a gas cluster ion beam or Ar ions. The compositions of the surface-treating layer and the intermediate layer can be determined by observing the peak areas of C1s, O1s, and Si2p under the above apparatus and measurement conditions, and calculating the atomic ratio of carbon, oxygen, and silicon.

Also, depth profile analysis may be performed as well. Usable measurement conditions for XPS analysis may be an X-ray source of 25 W monochromatic AlKα radiation, a photoelectron detection surface of 1,400 µm × 300 µm, a photoelectron detection angle in a range of 20° to 90° (for example, 20°, 45°, 90°), a pass energy of 23.5 eV, and Ar ions, gas cluster ions, C60 ions, or the like as sputtering ions. Etching may be performed to 1 to 100 nm by sputtering, and the composition in the coating film at each etching depth may be obtained as well.

By adjusting the photoelectron detection angle of the XPS analysis, the detection depth can be suitably adjusted. For example, a shallow angle close to 20° allows a detection depth of about 3 nm, while a deep angle close to 90° allows a detection depth of about 10 and several nanometers.

The silicon oxide containing intermediate layer described above can be formed by applying a silicon oxide precursor to the substrate surface. When the intermediate layer contains an alkali metal, the intermediate layer can be formed by applying a composition containing a silicon oxide precursor and an alkali metal source to the substrate surface.

Examples of the silicon oxide precursor include silicic acid, a partial condensed product of silicic acid, an alkali metal silicate, a silane compound having a hydrolyzable group that is bonded to a silicon atom, and a partially hydrolyzed condensed product of such a silane compound. Silicic acid and a partial condensed product thereof can be converted to silicon oxide by dehydrative condensation, and an alkali metal silicate can be converted to silicon oxide by being converted first to silicic acid or a partial condensed product thereof with an acid or a cation exchange resin and then dehydratively condensing the resulting silicic acid or partial condensed product thereof. Examples of the hydrolyzable group in the silane compound having a hydrolyzable group that is bonded to a silicon atom include an alkoxy group and a chlorine atom. The hydrolyzable group of the silane compound can be hydrolyzed to give a hydroxyl group, and the resulting silanol compound can be dehydratively condensed to give silicon oxide. Examples of the silane compound having a hydrolyzable group that is bonded to a silicon atom include alkoxysilanes such as tetraalkoxysilane and alkyltrialkoxysilane, and tetrachlorosilane.

The alkali metal source includes alkali metal hydroxides, water-soluble alkali metal salts, and the like. Examples of the water-soluble alkali metal salts include alkali metal carbonates, alkali metal hydrogen carbonates, alkali metal hydrochlorides, and alkali metal nitrates. The alkali metal source is preferably an alkali metal hydroxide and an alkali metal carbonate.

Note that the alkali metal silicate can be used as a silicon oxide precursor and an alkali metal source. The alkali metal silicate can be converted to silicon oxide via silicic acid, and in this process, a small amount of alkali metal may remain in the produced silicon oxide. Accordingly, regulating the amount of the remaining alkali metal enables silicon oxide containing a predetermined amount of alkali metal atoms to be obtained.

The thickness of the intermediate layer is not limited, and is in the range of, for example, 1 to 50 nm, preferably 1 to 30 nm, more preferably 2 to 15 nm, and even more preferably 3 to 10 nm.

So far, the compound, the composition, and the article of the present disclosure have been described in detail. The compound, the composition, the article, and the like of the present disclosure are not limited to those exemplified above.

### Examples

Hereinafter, the compound of the present disclosure will now be described by way of Examples, but the present disclosure is not limited to the following Examples.

### (Synthetic Example 1)

First, 3.00 g of 4-(trifluoromethoxy)phenylacetic acid, 20 g of tetrahydrofuran, 2.93 g of 1-(3-dimethylaminopropyl)-3-ethylcarbodiimide hydrochloride, 0.16 g of 4-dimethylaminopyridine, and 2.34 mL of 9-decen-1-ol were each added, and the mixture was stirred at room temperature overnight. Thereafter, purification was performed, thereby obtaining the following trifluoromethoxy group containing compound (1), CF₃OC₆H₄CH₂COO(CH₂)₇CH₂CH=CH₂ (4.50 g).
¹H NMR (CDCl₃, 400 MHz) δ [ppm]: 1.241-1.388 (m), 1.576-1.645 (t), 2.009-2.077 (m), 3.617 (s), 4.072-4.107 (t), 4.916-5.023 (m), 5.760-5.862 (m), 7.162-7.180 (m), 7.293-7.322 (m)

### Trifluoromethoxy group containing compound (1)

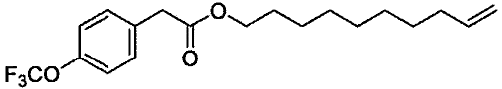

### (Synthetic Example 2)

First, 2.58 g of CF₃OC₆H₄CH₂COO(CH₂)₇CH₂CH=CH₂ which is the trifluoromethoxy group containing compound (1) obtained in Synthetic Example 1, 7.5 g of toluene, 0.046 g of triacetoxymethylsilane, and 0.35 ml of a xylene solutioncontaining a Pt complex of 1,3-divinyl-1,1,3,3-tetramethyldisiloxane at 2% were each added, 1.41 mL of trichlorosilane was then added, and the mixture was heated to 60°C, and stirred for 3 hours. Thereafter, volatile portions were distilled away under reduced pressure, a mixed solution of 0.67 g of methanol and 14.80 g of trimethyl orthoformate was then added, and the mixture was then heated to 65°C, and stirred for 2 hours. Thereafter, purification was performed, thereby obtaining the following compound (2) having a trimethoxysilyl group at an end, CF₃OC₆H₄CH₂COO(CH₂)₁₀Si(OCH₃)₃ (2.54 g).
¹H NMR (CDCl₃, 400 MHz) δ [ppm]: 0.628-0.669 (m), 1.255-1.428 (m), 1.589-1.623 (m), 3.569 (s), 3.614 (s), 4.068-4.102 (t), 7.157-7.178 (m), 7.290-7.325 (m)

### Trifluoromethoxy group containing compound (2)

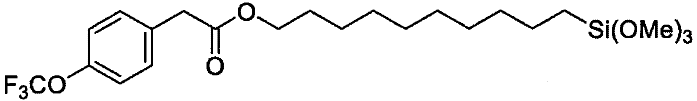

### (Synthetic Example 3)

First, 9.825 g of 4-(trifluoromethoxy)aniline, 5 g of toluene, 5.97 g of 1,5,7-triazabicyclo[4.4.0]dec-5-ene, and 5.62 ml of methyl undecenoate were each added, and the mixture was heated to 100°C, and stirred for 30 hours. Thereafter, purification was performed, thereby obtaining the following trifluoromethoxy group containing compound (3), CF₃OC₆H₄NHCO(CH₂)₇CH₂CH=CH₂ (8.03 g).
¹H NMR (CDCl₃, 400 MHz) δ [ppm]: 1.275-1.380 (m), 1.591-1.646 (m), 1.677-1.751 (m), 2.004-2.060 (m), 2.324-2.372 (m), 4.909-5.016 (m), 5.751-5.857 (m), 7.151-7.172 (d), 7.532-7.555 (d)

### Trifluoromethoxy group containing compound (3)

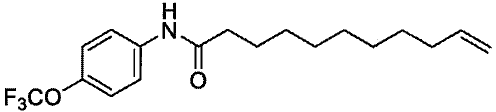

### (Synthetic Example 4)

First, 2.58 g of CF₃OC₆H₄NHCO(CH₂)₇CH₂CH=CH₂ which is the trifluoromethoxy group containing compound (3) obtained in Synthetic Example 3, 7.74 g of toluene, 0.05 g of triacetoxymethylsilane, and 0.38 ml of a xylene solutioncontaining a Pt complex of 1,3-divinyl-1,1,3,3-tetramethyldisiloxane at 2% were each added, 1.52 mL of trichlorosilane was then added, and the mixture was heated to 60°C, and stirred for 3 hours. Thereafter, volatile portions were distilled away under reduced pressure, a mixed solution of 0.72 g of methanol and 15.95 g of trimethyl orthoformate was then added, and the mixture was then heated to 65°C, and stirred for 2 hours. Thereafter, purification was performed, thereby obtaining the following compound (4) having a trimethoxysilyl group at an end, CF₃OC₆H₄NHCO(CH₂)₁₀Si(OCH₃)₃ (3.07 g).
¹H NMR (CDCl₃, 400 MHz) δ [ppm]: 0.617-0.657 (m), 1.257-1.412 (m), 1.600-1.636 (m), 1.668-1.722 (m), 2.313-2.364 (m) 3.561 (s), 7.142-7.164 (d), 7.535-7.557 (d)

### Trifluoromethoxy group containing compound (4)

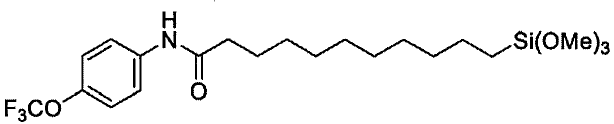

### (Synthesis Example 5)

First, 5.19 g of 16-hydroxyhexadecanoic acid, 35.0 ml of toluene, and 35.0 ml of methanol were each added, 41.28 ml of a 10% hexane solution of trimethylsilyldiazomethane was subsequently added under an ice bath, and the mixture was stirred at room temperature for 1 hour. Thereafter, purification was performed, thereby obtaining the following methyl ester group containing alcohol compound (5), HO(CH₂)₁₅COOCH₃ (5.40 g).
¹H NMR (CDCl₃, 400 MHz) δ [ppm]: 1.220-1.331 (m), 1.525-1.628 (m), 2.276-2.314 (t), 3.618-3.651 (t), 3.659 (s)

### Methyl ester group containing alcohol compound (5)

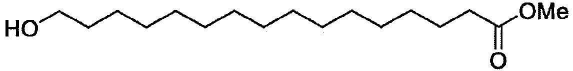

### (Synthesis Example 6)

First, 5.50 g of HO(CH₂)₁₅COOCH₃ which is the methyl ester group containing alcohol compound (5) obtained in Synthetic Example 5, 50.7 g of tetrahydrofuran, 1.15 g of sodium hydride, and 2.92 g of carbon disulfide were each added, and the mixture was stirred at room temperature for 3 hours. Subsequently, 4.09 g of iodomethane was added, and the mixture was stirred at room temperature for 2 hours. Thereafter, purification was performed, thereby obtaining the following xanthate ester group containing compound (6), CH₃SC(S)O(CH₂)₁₅COOCH₃ (6.11 g).
¹H NMR (CDCl₃, 400 MHz) δ [ppm]: 1.252-1.401 (m), 1.594-1.631 (m), 1.774-1.812 (m), 2.280-2.317 (t), 2.554 (s), 3.663 (s), 4.569-4.602 (t)

### Xanthate ester group containing compound (6)

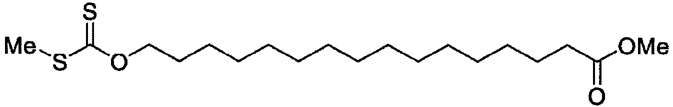

### (Synthetic Example 7)

First, 3.03 g of CH₃SC(S)O(CH₂)₁₅COOCH₃ which is the xanthate ester group containing compound (6) obtained in Synthetic Example 6, 48.0 ml of dichloromethane, and 10.44 g of 1,3-dibromo-5,5-dimethylhydantoin were each added, and the mixture was stirred at -78°C for 30 minutes. Subsequently, 7.63 g of pyridinium poly(hydrogen fluoride) was added, and the mixture was stirred at -78°C for 1 hour and at room temperature for 5 hours. Thereafter, purification was performed, thereby obtaining the following trifluoromethoxy group containing compound (7), CF₃O(CH₂)₁₅COOCH₃ (2.53 g).
¹H NMR (CDCl₃, 400 MHz) δ [ppm]: 1.243-1.382 (m), 1.568-1.700 (m), 2.271-2.308 (t), 3.653 (s), 3.917-3.949 (t)

### Trifluoromethoxy group containing compound (7)

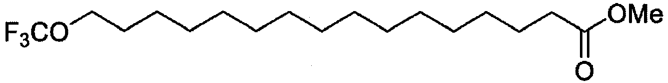

### (Synthetic Example 8)

First, 1.12 g of CF₃O(CH₂)₁₅COOCH₃ which is the trifluoromethoxy group containing compound (7) obtained in Synthetic Example 7, 0.53 g of 1,5,7-triazabicyclo[4.4.0]dec-5-ene, and 9.02 g of allylamine were each added, and the mixture was heated to 65°C, and stirred for 6 hours. Thereafter, purification was performed, thereby obtaining the following trifluoromethoxy group containing compound (8), CF₃O(CH₂)₁₅CONHCH₂CH=CH₂ (1.05 g).
¹H NMR (CDCl₃, 400 MHz) δ [ppm]: 1.250-1.391 (m), 1.598-1.710 (m), 2.169-2.208 (t), 3.875-3.888 (t), 3.927-3.960 (t), 5.116-5.202 (m), 5.456 (brs), 5.792-5.889 (m)

### Trifluoromethoxy group containing compound (8)

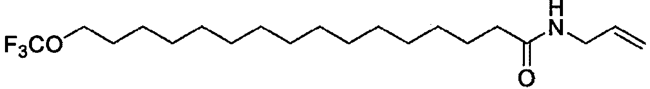

### (Synthetic Example 9)

First, 1.05 g of CF₃O(CH₂)₁₅CONHCH₂CH=CH₂ which is the trifluoromethoxy group containing compound (8) obtained in Synthetic Example 8, 3.15 g of toluene, 0.02 g of triacetoxymethylsilane, and 0.14 ml of a xylene solutioncontaining a Pt complex of 1,3-divinyl-1,1,3,3-tetramethyldisiloxane at 2% were each added, 0.56 mL of trichlorosilane was then added, and the mixture was heated to 60°C, and stirred for 3 hours. Thereafter, volatile portions were distilled away under reduced pressure, a mixed solution of 0.27 g of methanol and 5.87 g of trimethyl orthoformate was then added, and the mixture was then heated to 65°C, and stirred for 2 hours. Thereafter, purification was performed, thereby obtaining the following compound (9) having a trimethoxysilyl group at an end, CF₃O(CH₂)₁₅CONH(CH₂)₃Si(OCH₃)₃ (1.17 g).
¹H NMR (CDCl₃, 400 MHz) δ [ppm]: 0.620-0.661 (m), 1.242-1.384 (m), 1.591-1.686 (m), 2.117-2.156 (t), 3.211-3.261 (q), 3.563 (s), 3.919-3.952 (t)

### Compound (9) containing trimethoxysilyl group at an end

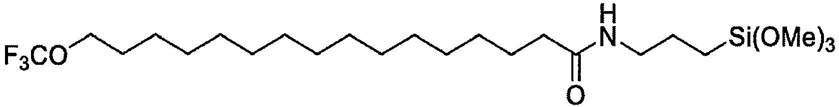

### (Surface-treating agent 1)

The compound (9) obtained as described above was diluted to a 10 wt% 1,3-bis(trifluoromethyl)benzene solution to obtain a surface-treating agent 1.

### (Synthetic Example 10)

First, 3.0 g of trifluoroethanol, 3.0 g of 18-bromo-1-octadecene, 1.5 g of a 24% aqueous potassium hydroxide solution, 0.4 g of tetrabutylammonium bromide, and 0.5 g of diglyme were each added, and the mixture was stirred under reflux conditions for 24 hours. Thereafter, purification was performed, thereby obtaining the following 1,1,1-trifluoroethoxy group containing compound (10), CF₃CH₂O(CH₂)₁₆CH=CH₂ (2.8 g).
¹H NMR (CDCl₃, 400 MHz) δ [ppm]: 1.110-1.1.432 (m), 1.565-1.646 (m), 2.009-2.065 (q), 3.575-3.608 (t), 3.764-3.829 (q), 4.908-5.019 (m), 5.763-5.865 (m)

### Trifluoroethoxy group containing compound (10)

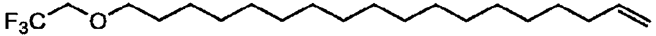

### (Synthetic Example 11)

First, 1.0 g of CF₃CH₂O(CH₂)₁₆CH=CH₂ which is the trifluoroethoxy group containing compound (10) obtained in Synthetic Example 10, 3.0 g of toluene, 0.02 g of triacetoxymethylsilane, 0.2 ml of a xylene solutioncontaining a Pt complex of 1,3-divinyl-1,1,3,3-tetramethyldisiloxane at 2%, and 1.2 mL of trichlorosilane were added, heated to 55°C, and stirred for 3 hours. Thereafter, volatile portions were distilled away under reduced pressure, a mixed solution of 0.1 g of methanol and 1.8 g of trimethyl orthoformate was then added, and the mixture was then heated to 60°C, and stirred for 3 hours. Thereafter, purification was performed, thereby obtaining the following compound (11) having a trimethoxysilyl group at an end, CF₃CH₂O(CH₂)₁₈Si(OCH₃)₃ (1.74 g).
¹H NMR (CDCl₃, 400 MHz) δ [ppm]: 0.604-0.668 (m), 1.195-1.434 (m), 1.554-1.624 (m), 3.521-3.611 (m), 3.751-3.817 (q)

### Trifluoroethoxy group containing compound (11)

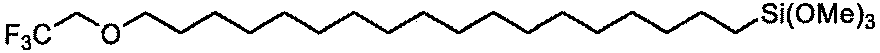

### (Surface-treating agent 2)

The compound (11) obtained as described above was diluted to a 10 wt% hexamethyldisiloxane solution to obtain a surface-treating agent 2.

### (Surface-treating agent 3)

CH₃(CH₂)₁₆CONH(CH₂)₃Si(OCH₃)₃ which is a compound (X) was diluted to a 10 wt% ethanol solution to obtain a surface-treating agent 3.

### (Formation of surface-treating layer)

### (Examples 1 and 2, and Comparative Example 1)

The surface-treating agents 1 to 3 prepared as described above were vacuumdeposited on a chemically tempered glass ("Gorilla" glass, manufactured by Corning Incorporated, thickness 0.7 mm). Specifically, a molybdenum boat in the vacuum deposition device was filled with 0.1 g of the surface-treating agent, and the vacuum deposition device was evacuated to a pressure of 3.0 × 10⁻³ Pa or lower. Thereafter, a silicon dioxide film with a thickness of 7 nm was formed, followed by heating the boat by the resistance heating scheme to form a surface-treating layer. Thereafter, a heating treatment was performed in an oven at 150°C for 2 hours to obtain a surface-treating layer.

### <Evaluation>

### [Evaluation of Oil-Repellency]

After the surface-treating layer was formed, the excess on the surface was wiped off, and the static contact angle of the normal hexadecane angle was measured. For the measurement of the contact angle, a fully automatic contact angle meter DropMaster 700 (manufactured by Kyowa Interface Science Co., Ltd) was used under an environment of 25°C. Specifically, the measurement target, substrate having the surface-treating layer, was placed horizontally, hexadecane was dropped from a micro syringe onto its surface, and a static image was taken one second after the dropping with a video microscope to thereby measure the static contact angle. The static contact angle was measured at five different points on the surface-treating layer of the substrate, and the average value calculated therefrom was used. The results are shown in Table 1.

**[Table 1]**

| | Surface-treating agent | Normal hexadecane contact angle [°] |
|---|---|---|
| Example 1 | 1 | 43 |
| Example 2 | 2 | 50 |
| Comparative Example 1 | 3 | 35 |

### Industrial Applicability

The compound of the present disclosure can be suitably utilized in a variety of diverse applications.

## Claims

1. A fluorine containing silane compound represented by the following formula (1):
(Rf¹)_{α1}-X^{A}-(R^{Si})_{α2} ··· (1)
wherein
Rf¹ is each independently a group having CF₃ at an end,
provided that CF₃ at the end does not have CF₂ at a vicinal position,
X^{A} is each independently a single bond, an oxygen atom, or a di- to decavalent organic group,
R^{Si} is a monovalent group containing a Si atom to which a hydroxyl group or a hydrolyzable group is bonded,
α1 is an integer of 1 to 9, and
α2 is an integer of 1 to 9.

2. The fluorine containing silane compound according to claim 1, wherein Rf¹ is each independently a group represented by R^{A1}-X^{B}-
wherein
R^{A1} is CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-, and
X^{B} is
a single bond,
a group containing a divalent siloxane group, or
a group represented by -(CFH)ₐ₁-(CH₂)_{b1}-(O)_{c1}-(C(R^{A2})ₑ₁H₂₋ₑ₁)_{d1}-(NR^{A3})_{f1}-
wherein
R^{A2} is a monovalent group having CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-,
R^{A3} is a hydrogen atom, or a monovalent group having CF₃-, CF₃O-, CF₃NH-, CF₃CH₂NH-, (CF₃)₂N-, (CF₃CH₂)₂N-, CF₃S-, CF₃C(=O)-, CF₃CH₂C(=O)-, CF₃C(=O)O-, CF₃CH₂OC(=O)-, CF₃CONH-, CF₃CH₂CONH-, CF₃NHCO-, CF₃CH₂NHCO-, CF₃CON(CF₃)-, CF₃CH₂CON(CF₃)-, CF₃CON(CH₂CF₃)-, CF₃CH₂CON(CH₂CF₃)-, (CF₃)₂NCO-, or (CF₃CH₂)₂NCO-,
a1 is an integer of 0 to 200,
b1 is an integer of 0 to 200,
c1 is an integer of 0 to 200,
d1 is an integer of 0 to 200,
e1 is 1 or 2,
fl is an integer of 0 to 200, and
the occurrence order of the respective repeating units enclosed in parentheses provided with the signs a1, b1, c1, d1 and f1 is not limited.

3. The fluorine containing silane compound according to claim 2, wherein R^{A1} is CF₃O-, CF₃NH-, or (CF₃)₂N-.

4. The fluorine containing silane compound according to claim 2 or 3, wherein R^{A2} is a monovalent group having CF₃O-, CF₃NH-, or (CF₃)₂N-.

5. The fluorine containing silane compound according to any one of claims 2 to 4, wherein R^{A3} is a hydrogen atom, or a monovalent group having CF₃O-.

6. The fluorine containing silane compound according to claim 2 or 3, wherein X^{B} is a group represented by -(CFH)ₐ₁-(CH₂)_{b1}-(O)_{c1}-
wherein
a1 is an integer of 0 to 200,
b1 is an integer of 0 to 200,
c1 is an integer of 0 to 10, and
the occurrence order of the respective repeating units enclosed in parentheses provided with the signs a1, b1 and c1 is not limited.

7. The fluorine containing silane compound according to claim 2 or 3, wherein X^{B} is a group represented by -(CH₂)_{b1}-
wherein b1 is an integer of 0 to 36.

8. The fluorine containing silane compound according to claim 2 or 3, wherein X^{B} is a group represented by -(CH₂)_{g1}-R^{S}-Si(R⁵)₂-(CH₂)_{g1}-
wherein
g1 is each independently an integer of 0 to 30, and
R^{S} is a group represented by the following formula: 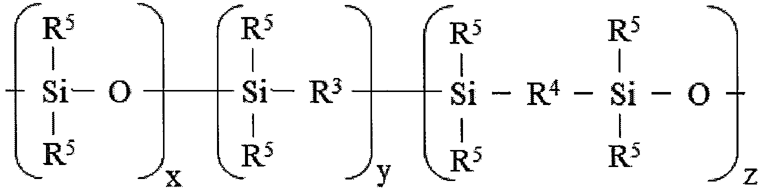
wherein
R³ is each independently a single bond, a C₁₋₁₂ alkylene group, -R⁶-O-R⁶-, -R⁸-R⁷- R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
R⁴ is each independently a C₁₋₁₂ alkylene group, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
R⁶ is each independently a C₁₋₆ alkylene group,
R⁷ is each independently an optionally substituted phenylene group or naphthylene group,
R⁸ is each independently a single bond, or a C₁₋₆ alkylene group,
R⁹ is each independently a single bond, an oxygen atom,
R⁵ is each independently a hydrocarbon group,
x is an integer of 0 to 200,
y is an integer of 0 to 200,
z is an integer of 0 to 200,
x + y + z is 1 or more, and
the occurrence order of the respective repeating units enclosed in parentheses provided with x, y or z is not limited.

9. The fluorine containing silane compound according to any one of claims 1 to 8, wherein X^{A} is a single bond, -(X⁵²)₁₅-, or a group represented by (X^{A1}): 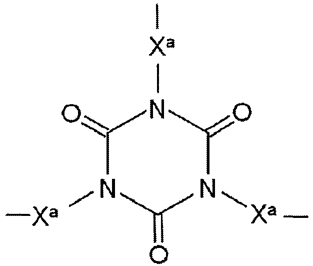 wherein
X⁵² is each independently a group selected from the group consisting of -O-, -S-, an o-, m- or p-phenylene group, -CO-, -C(O)O-, -OC(O)-, -CONR⁵⁴-, -NR⁵⁴CO-, -O-CONR⁵⁴-, -NR⁵⁴CO-O-, -NR⁵⁴CONR⁵⁴-, -NR⁵⁴-, and -(CH₂)ₙ₅-,
R⁵⁴ is each independently a hydrogen atom, or a monovalent organic group,
n5 is each independently an integer of 1 to 30,
15 is an integer of 1 to 10, and
X^{a} is each independently a single bond or a divalent linking group.

10. The fluorine containing silane compound according to claim 1, wherein R^{Si} is a group represented by the following formula (S1), (S2), (S3), (S4) or (S5): 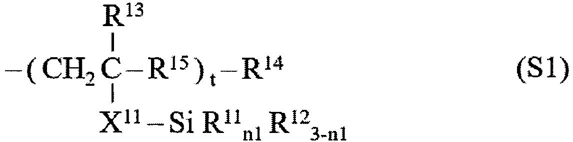
-SiR¹¹ₙ₁R¹²₃₋ₙ₁ (S2)
-SiR^{a1}ₖ₁R^{d1}ₗ₁R^{c1}ₘ₁ (S3)
-CR^{d1}ₖ₂R^{e1}ₗ₂R^{f1}ₘ₂ (S4)
-NR^{g1}ₖ₃R^{h1}ₗ₃ (S5)
wherein
R¹¹ is each independently a hydroxyl group or a hydrolyzable group,
R¹² is each independently a monovalent organic group,
n1 is each independently an integer of 0 to 3 for each (SiR¹¹ₙ₁R¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom, or -X¹¹-SiR¹¹ₙ₁R¹²_{3- n1},
R¹⁵ is each independently a single bond, an oxygen atom, an alkylene group having 1 to 6 carbon atoms, or an alkyleneoxy group having 1 to 6 carbon atoms,
R^{a1} is each independently -Z¹-S1R²¹ₚ₁R²²_{q1}R²³ᵣ₁,
Z¹ is each independently a divalent organic group,
R²¹ is each independently -Z^{1'}-SiR^{21'}ₚ₁R^{22'}_{q1'}R^{23'}_{r1'},
R²² is each independently a hydroxyl group or a hydrolyzable group,
R²³ is each independently a monovalent organic group,
p1 is each independently an integer of 0 to 3,
q1 is each independently an integer of 0 to 3,
r1 is each independently an integer of 0 to 3,
Z^{1'} is each independently a divalent organic group,
R^{21'} is each independently -Z^{1"}-SiR^{22"}_{q1"}R^{23"}_{r1"};
R^{22'} is each independently a hydroxyl group or a hydrolyzable group,
R^{23'} is each independently a monovalent organic group,
p1' is each independently an integer of 0 to 3,
q1' is each independently an integer of 0 to 3,
r1' is each independently an integer of 0 to 3,
Z^{1"} is each independently a divalent organic group,
R^{22"} is each independently a hydroxyl group or a hydrolyzable group,
R^{23"} is each independently a monovalent organic group,
q1" is each independently an integer of 0 to 3,
r1" is each independently an integer of 0 to 3,
R^{b1} is each independently a hydroxyl group or a hydrolyzable group,
R^{c1} is each independently a monovalent organic group,
k1 is each independently an integer of 0 to 3,
11 is each independently an integer of 0 to 3,
m1 is each independently an integer of 0 to 3,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2'}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group;
R³⁴ is each independently a hydroxyl group or a hydrolyzable group,
R³⁵ is each independently a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
12 is each independently an integer of 0 to 3,
m2 is each independently an integer of 0 to 3,
R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or - Z⁴-CR^{d1}ₖ₂R^{e1}ₗ₂R^{f1}ₘ₂,
Z⁴ is each independently a single bond, an oxygen atom, or a divalent organic group,
k3 is 1 or 2, and
l3 is 0 or 1,
provided that in the formula (S1), (S2), (S3), (S4), or (S5), at least two Si atoms to which a hydroxyl group or a hydrolyzable group is bonded are present.

11. The fluorine containing silane compound according to claim 1,
wherein
Rf¹ is R^{A1}-X^{B}-,
R^{A1} is CF₃- or CF₃O-,
X^{B} is a single bond,
X^{A} is -(p-phenylene)ᵥ₁-(CH₂)ᵥ₂-R⁵⁷ᵥ₃-(CH₂)ᵥ₄-,
R⁵⁷ is -CONH-, -NHCO-, -COO-, or -O-,
v1 is 0 or 1,
v2 is an integer of 0 to 20,
v3 is 0 or 1,
v4 is an integer of 2 to 20,
R^{Si} is -SiR¹¹₃,
R¹¹ is a methoxy group,
α1 is 1, and
α2 is 1.

12. The fluorine containing silane compound according to claim 1, which is selected from the following compounds: 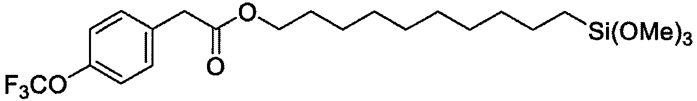 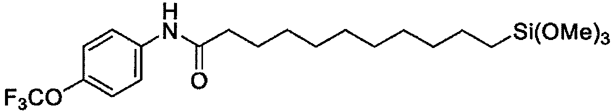 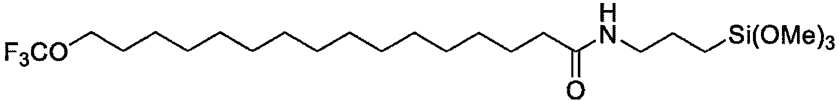 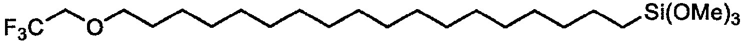 .

13. A surface-treating agent comprising the fluorine containing silane compound according to any one of claims 1 to 12.

14. The surface-treating agent according to claim 11, further comprising a condensed product of the fluorine containing silane compound according to any one of claims 1 to 12.

15. The surface-treating agent according to claim 13 or 14, further comprising an alcohol represented by R⁹⁰-OH, wherein R⁹⁰ is a monovalent organic group.

16. The surface-treating agent according to any one of claims 13 to 15, which is for vacuum deposition.

17. The surface-treating agent according to any one of claims 13 to 15, which is for wet coating.

18. A pellet comprising the surface-treating agent according to any one of claims 13 to 17.

19. An article comprising a substrate and a layer on the substrate, the layer being formed from the fluorine containing silane compound according to any one of claims 1 to 12.

20. The article according to claim 19, comprising an intermediate layer containing silicon oxide between the substrate and the layer.

21. The article according to claim 20, wherein the intermediate layer comprises alkali metal atoms.

22. The article according to claim 21, wherein at least a portion of the alkali metal atoms are sodium.

23. The article according to any one of claims 19 to 22, which is an optical member.

24. The article according to claim 23, which is a display.
